# EUROPEAN PATENT APPLICATION

(11) **EP 4 362 244 A1**
(43) Date of publication of application: **01.05.2024**
(21) Application number: 22848915.9
(22) Date of filing: 18.03.2022
(51) Int. Cl.: H01S 3/067, G02F 1/35, G02F 1/365

(54) **FIBER LASER DEVICE**

(30) Priority: 29.07.2021 JP 2021123925
(71) Applicant: Hamamatsu Photonics K.K., Hamamatsu-shi, Shizuoka 435-8558 (JP)
(72) Inventor: SHIMOMAKI, Masaru, Hamamatsu-shi, Shizuoka 435-8558 (JP); KATO, Shin, Hamamatsu-shi, Shizuoka 435-8558 (JP); OHBA, Shinichi, Hamamatsu-shi, Shizuoka 435-8558 (JP); UMENO, Keita, Hamamatsu-shi, Shizuoka 435-8558 (JP)
(74) Representative: Grünecker Patent- und Rechtsanwälte PartG mbB
(86) International application number: PCT/JP2022/012697
(87) International publication number: WO 2023/007831

(57) **Abstract**

A fiber laser device includes: a housing; a first optical element configured to include a first fiber and a first fiber connector; a second optical element configured to include a second fiber and a second fiber connector; and a movable holder configured to hold the second fiber connector and be movable so that an orientation of the second fiber connector changes between a first orientation and a second orientation. The first optical element and the second optical element are optically connectable via the first fiber connector and the second fiber connector, a first opening is formed in a wall portion of the housing, the first orientation is an orientation when the first optical element and the second optical element are optically connected, and the second orientation is an orientation in which an end surface of the second fiber is exposed through the first opening.

## Description

### Technical Field

The present disclosure relates to a fiber laser device.

### Background Art

As a technique related to a fiber laser device, a device including a fiber structure (first optical element) including a saturable absorber and a wavelength division multiplexing coupler (second optical element) is known (for example, see Patent Literature 1). In such a fiber laser device, a first fiber connector is provided at an end portion of a first fiber optically connected to the fiber structure, and a second fiber connector is provided at an end portion of a second fiber optically connected to the wavelength division multiplexing coupler. The fiber structure and the wavelength division multiplexing coupler are optically connected via the first fiber connector and the second fiber connector.

### Citation List

### Patent Literature

Patent Literature 1: Japanese Unexamined Patent Publication No. 2017-067804

### Summary of Invention

### Technical Problem

In the fiber laser device as described above, usually, the first optical element and the second optical element are housed in a housing. When the first optical element and the second optical element are housed in the housing as described above, there may be a problem that it is difficult to perform maintenance (observation, cleaning, and the like) on an end surface of the second fiber.

Therefore, an object of the present disclosure is to provide a fiber laser device capable of easily performing the maintenance on the end surface of the second fiber.

### Solution to Problem

A fiber laser device according to one aspect of the present disclosure includes: a housing; a first optical element configured to be housed in the housing, include a first fiber and a first fiber connector provided at an end portion of the first fiber, and be for oscillating laser beam; a second optical element configured to be housed in the housing, include a second fiber and a second fiber connector provided at an end portion of the second fiber, and be for oscillating the laser beam; and a movable holder configured to hold the second fiber connector and be movable so that an orientation of the second fiber connector changes between a first orientation and a second orientation, the first optical element and the second optical element are optically connectable via the first fiber connector and the second fiber connector, a first opening is formed in a wall portion of the housing, the first orientation is an orientation of the second fiber connector when the first optical element and the second optical element are optically connected, and the second orientation is an orientation of the second fiber connector in which an end surface of the second fiber is exposed through the first opening.

In this fiber laser device, the end surface of the second fiber can be exposed through the first opening by moving the movable holder and setting the orientation of the second fiber connector, for example, from the first orientation to the second orientation. Thus, for example, the end surface of the second fiber can be easily observed with a fiberscope, and the end surface of the second fiber can be easily cleaned with a cleaner. Therefore, the maintenance on the end surface of the second fiber can be easily performed.

In the fiber laser device according to one aspect of the present disclosure, the movable holder may be provided on a support plate in the housing, and may be movable so that an orientation of the second fiber connector changes between the first orientation along the support plate and the second orientation perpendicular to the support plate. In this case, the movable holder is movable so that the orientation of the second fiber connector changes by 90°, and the orientation of the second fiber connector can be switched between the first orientation and the second orientation.

In the fiber laser device according to one aspect of the present disclosure, the first opening may be formed in a wall portion facing or adjacent to the movable holder in the housing. In this case, the movable holder can be easily accessed through the first opening.

In the fiber laser device according to one aspect of the present disclosure, the first optical element may include a saturable absorber, an excitation light source, or a wavelength division multiplexing coupler. In this case, the saturable absorber, the excitation light source or the wavelength division multiplexing coupler can be utilized as the first optical element.

In the fiber laser device according to one aspect of the present disclosure, the first optical element may be detachably attached inside the housing. In this case, for example, the maintenance on the end surface of the second fiber can be performed by removing the first optical element.

The fiber laser device according to one aspect of the present disclosure may further include a lock mechanism configured to prevent the first optical element from being removed from inside the housing when the laser beam is oscillated by the fiber laser device. By including the lock mechanism, it is possible to prevent damage caused by removal of the first optical element at the time of oscillation of the laser beam.

In the fiber laser device according to one aspect of the present disclosure, at least a part of the first optical element may be housed in a module housing, a second opening may be formed in a wall portion of the housing, and the module housing may be detachably attached inside the housing through the second opening. Thus, the first optical element can be modularized, and the modularized first optical element can be attached and detached using the second opening of the housing.

In the fiber laser device according to one aspect of the present disclosure, the module housing may be inserted through the second opening from one side in a predetermined direction of the module housing, the module housing may have a shape such that one side in a first direction perpendicular to the predetermined direction is different from the other side when viewed from the predetermined direction, and the second opening may correspond to the shape of the module housing. This makes it possible to prevent the module housing from being inserted through the second opening with one side and the other side in the first direction reversed.

The fiber laser device according to one aspect of the present disclosure may further include an elastic member configured to press the module housing toward a placement surface on which the module housing is placed. In this case, the elastic member can press the module housing against the placement surface.

The fiber laser device according to one aspect of the present disclosure may further include a grip portion provided on the module housing, the grip portion may be provided to project from an outer surface of the housing in a state where the module housing is attached inside the housing, and a projecting portion configured to cover at least a part of a periphery of the grip portion projecting may be provided on the outer surface of the housing. When the grip portion is used (for example, gripped and moved) in a state where the module housing is attached inside the housing, there is a possibility that the module housing is displaced. In this regard, according to one aspect of the present disclosure, in a state where the module housing is attached inside the housing, it is difficult to grip the grip portion by the projecting portion, and use of the grip portion can be suppressed. This makes it possible to prevent positional displacement of the module housing.

In the fiber laser device according to one aspect of the present disclosure, when the movable holder is moved so that the orientation of the second fiber connector is the second orientation, an end surface of the second fiber may be located outside the housing through the first opening. In this case, the maintenance on the end surface of the second fiber can be further easily performed.

In the fiber laser device according to one aspect of the present disclosure, the movable holder may be at least partially formed of a magnetic material, a holding portion provided in the housing and formed of a magnetic material may be further provided, and when the movable holder is moved so that the orientation of the second fiber connector is the second orientation, the movable holder may be held to maintain the second orientation by magnetic force of the holding portion. In this case, it is possible to maintain a state in which the end surface of the second fiber is exposed through the first opening by using the magnetic force.

The fiber laser device according to one aspect of the present disclosure may further include a fiber tube fixed near the movable holder in the housing, and the second fiber may be inserted through the fiber tube. When the second fiber is directly fixed near the movable holder, although vibration of the second fiber can be suppressed, the second fiber also tends to move greatly along with movement of the movable holder, and there is a possibility that the second fiber is bent due to the movement and performance is adversely affected. In this regard, in one aspect of the present disclosure, since the second fiber is fixed near the movable holder through the fiber tube, the vibration of the second fiber can be suppressed, and even when the second fiber moves along with the movable holder, the movement can be allowed, and bending of the second fiber can be suppressed.

In the fiber laser device according to one aspect of the present disclosure, the movable holder may be movably fixed in the housing. Thus, position of the movable holder can be adjusted.

The fiber laser device according to one aspect of the present disclosure may include: a partition plate configured to partition an inside of the housing into a first space and a second space; and a fan configured to pump air in the first space, and the first optical element, the second optical element, and the movable holder may be arranged in the second space. In this case, it is possible to prevent dust or the like from adhering to configurations of the first optical element and the second optical element due to influence of the air pumped by the fan.

The fiber laser device according to one aspect of the present disclosure may further include: an adapter configured to connect the first fiber connector and the second fiber connector; and an adapter detector configured to detect presence or absence of the adapter. In this case, the first fiber connector and the second fiber connector can be reliably connected by the adapter. Further, based on a detection result of the adapter detector, it is possible to prevent forgetting to attach the adapter.

In the fiber laser device according to one aspect of the present disclosure, the movable holder may include a fixing member fixed in the housing, and a swing member swingable about a swing shaft with respect to the fixing member and provided with the second fiber connector, and the swing member may be movable by a predetermined length in a direction along the swing shaft with respect to the fixing member. In this case, when the first optical element and the second optical element are optically connected, even when the first fiber connector is shifted from the second fiber connector in the direction along the swing shaft, the second fiber connector can be moved so as to eliminate the shift.

### Advantageous Effects of Invention

According to the present disclosure, it is possible to provide a fiber laser device capable of easily performing the maintenance on the end surface of the second fiber.

### Brief Description of Drawings

FIG 1 is a schematic configuration diagram illustrating a supercontinuum light source according to a first embodiment.
FIG 2 is a schematic configuration diagram illustrating a main part of the supercontinuum light source of FIG 1.
FIG 3 is a schematic configuration diagram illustrating a state in which a fiber module for a fiber laser device is removed in FIG 2.
FIG 4 is a perspective view illustrating the supercontinuum light source of FIG 1.
FIG 5 is a rear view illustrating the supercontinuum light source of FIG 1.
FIG 6 is a perspective view illustrating the supercontinuum light source of FIG 1 with a housing omitted.
FIG 7 is an exploded perspective view illustrating the main part of the supercontinuum light source of FIG 2.
FIG 8 is an exploded perspective view of a swing member in a movable holder in FIG 7.
FIG 9 is a cross-sectional view illustrating an inside of a module housing of the fiber module for the fiber laser device of FIG 2.
FIG 10 is a perspective view illustrating the supercontinuum light source in a state of FIG 3.
FIG 11 is a perspective view illustrating the supercontinuum light source of FIG 10 with the housing omitted.
FIG 12 is an enlarged perspective view illustrating a second opening of the supercontinuum light source of FIG 10.
FIG 13 is a perspective view of a state in which a second fiber connector is in a second orientation by the movable holder in the supercontinuum light source of FIG 10.
FIG 14 is another perspective view of the state in which the second fiber connector is in the second orientation by the movable holder in the supercontinuum light source of FIG 10.
FIG 15 is a perspective view illustrating a case where observation with a fiberscope is performed in the supercontinuum light source of FIG 13.
FIG 16 is a perspective view illustrating a case where cleaning is performed by a cleaner in the supercontinuum light source of FIG 13.
FIG 17 is a perspective view illustrating the movable holder and an adapter detector according to a modification.
FIG 18 is another perspective view illustrating the movable holder and the adapter detector according to the modification.
FIG 19 is another perspective view illustrating the movable holder and the adapter detector according to the modification.
FIG 20 is a schematic configuration diagram illustrating the main part of the supercontinuum light source according to a second embodiment.
FIG 21 is a schematic configuration diagram illustrating the main part of the supercontinuum light source according to a third embodiment.
FIG 22 is a perspective view illustrating the supercontinuum light source according to a fourth embodiment.
FIG 23 is a perspective view illustrating the state in which the fiber module for the fiber laser device is removed in FIG 22.
FIG 24 is a cross-sectional view illustrating the inside of the module housing of the fiber module for the fiber laser device according to the modification.

### Description of Embodiments

Hereinafter, embodiments will be described in detail with reference to the drawings. Hereinafter, the same or corresponding elements are denoted by the same reference numerals, and redundant description will be omitted.

### [First Embodiment]

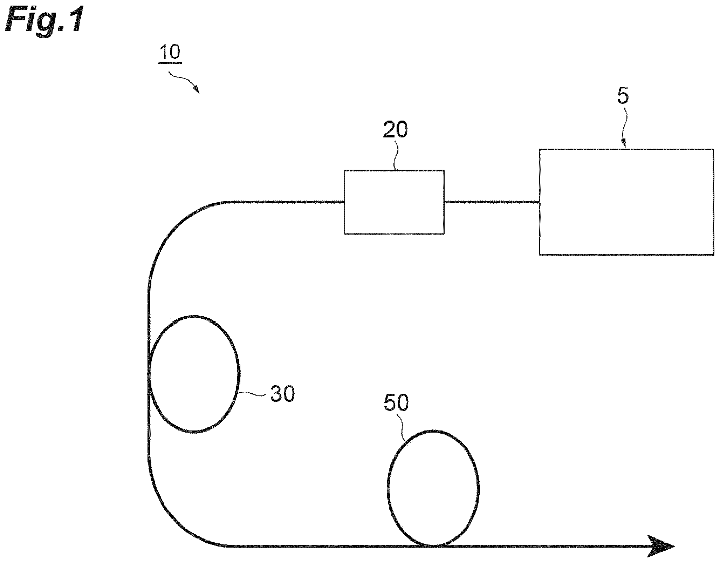

As illustrated in FIG 1, a supercontinuum light source 10 is a light source that generates supercontinuum light. The supercontinuum light source 10 constitutes a fiber laser device. The supercontinuum light source 10 is a broadband spectrum light source, and is used, for example, for biological observation and spectroscopic analysis. The supercontinuum light source 10 includes a laser oscillator 5, a fiber amplifier 20, a wavelength shift fiber 30, and a highly nonlinear optical fiber 50.

The laser oscillator 5 is a ring-type laser oscillator. An output end of the laser oscillator 5 is connected to the fiber amplifier 20. An output end of the fiber amplifier 20 is connected to the wavelength shift fiber 30. An output end of the wavelength shift fiber 30 is connected to the highly nonlinear optical fiber 50. The highly nonlinear optical fiber 50 is a highly nonlinear optical fiber that generates supercontinuum light. The highly nonlinear optical fiber 50 expands a spectrum width of input pulse light by a nonlinear optical effect and converts the pulse light into the supercontinuum light. The supercontinuum light is output from an output end of the highly nonlinear optical fiber 50.

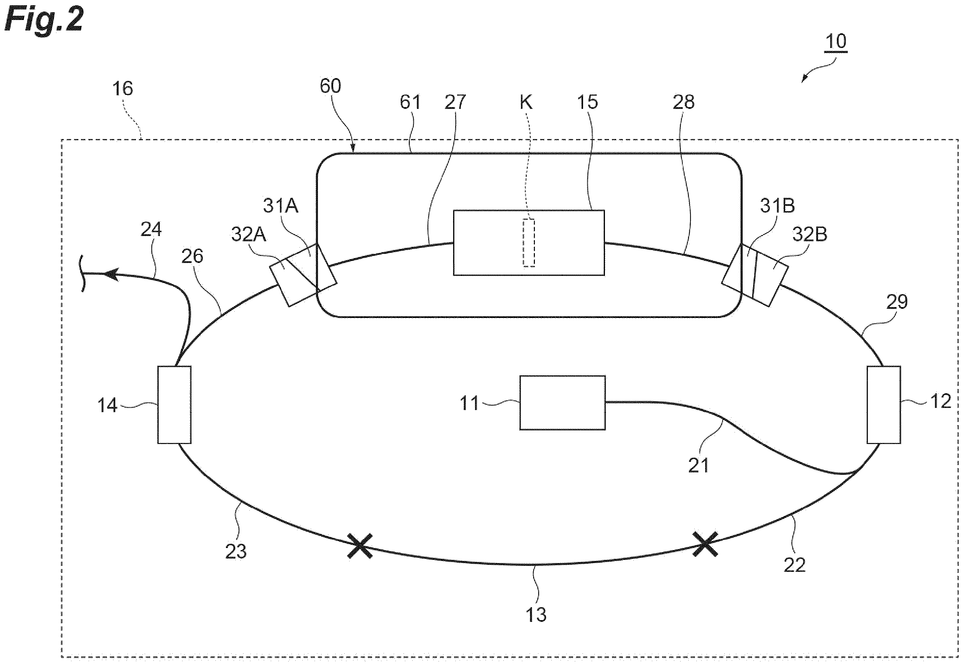

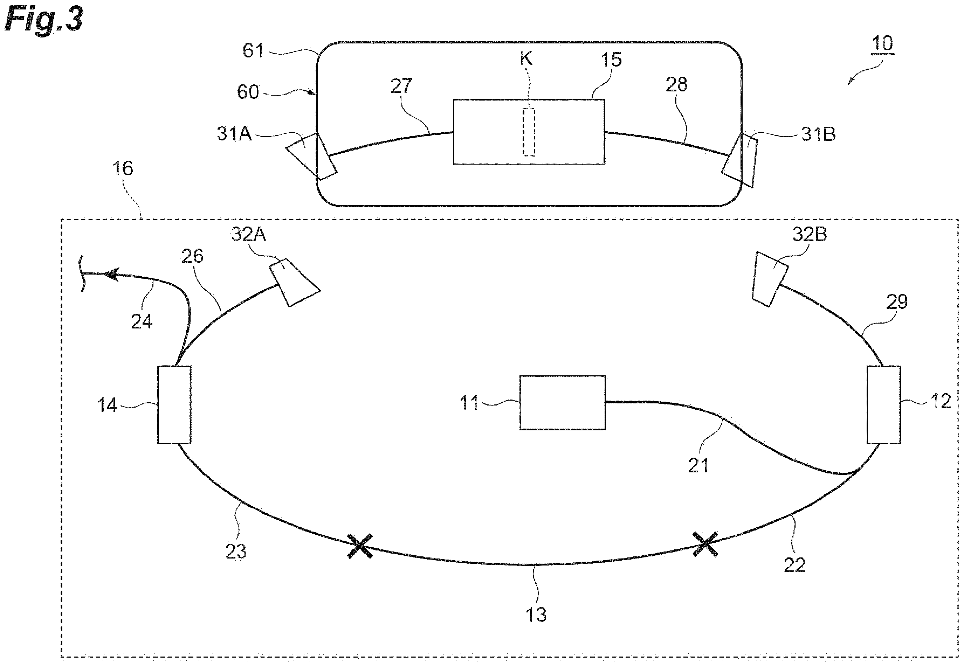

As illustrated in FIGS. 2 and 3, such a supercontinuum light source 10 includes an excitation light source 11, a wavelength division multiplexing coupler 12, an amplification fiber 13, an output coupler 14, a fiber structure 15, and a housing 16. The excitation light source 11, the wavelength division multiplexing coupler 12, the amplification fiber 13, the output coupler 14, and the fiber structure 15 are housed in the housing 16. The excitation light source 11, the wavelength division multiplexing coupler 12, the amplification fiber 13, the output coupler 14, and the fiber structure 15 constitute an optical element for oscillating laser beam, and constitute the laser oscillator 5.

The excitation light source 11 is, for example, a laser diode. The excitation light source 11 outputs excitation light. The excitation light source 11 has a fiber 21. The wavelength division multiplexing coupler 12 has a fiber 22 and a fiber 29. The wavelength division multiplexing coupler 12 reflects the excitation light input from the excitation light source 11 through the fiber 21 and outputs the excitation light to the fiber 22. The wavelength division multiplexing coupler 12 transmits the laser beam input from the fiber 28 of the fiber structure 15 through the fiber 29 and outputs the laser beam to the fiber 22. The fiber 29 constitutes a second fiber.

The amplification fiber 13 absorbs the excitation light input through the fiber 22 and emits the laser beam. The amplification fiber 13 is, for example, an erbium-doped fiber (EDF) in which erbium (Er) is added to a core. The output coupler 14 includes a fiber 23, a fiber 24, and a fiber 26. The output coupler 14 divides the laser beam input from the amplification fiber 13 through the fiber 23 at a predetermined ratio, outputs a part of the laser beam to the fiber 26, and outputs the other part of the laser beam to the fiber 24. The laser light output to the fiber 24 is output to an outside as output light. The fiber 26 constitutes the second fiber.

The fiber structure 15 is a structure including a saturable absorber K. The saturable absorber K is a material having light transparency changing depending on incident light intensity. The saturable absorber K includes a sheet-like resin material and a plurality of carbon nanotubes dispersed in the resin material. As the resin material, a material having excellent heat resistance is used. The carbon nanotube absorbs light in a 1560 nm band, and has a saturable absorption characteristic in which the absorption decreases when the incident light intensity reaches a high level. The fiber structure 15 has fibers 27 and 28. The fibers 27 and 28 constitute a first fiber. In the fiber structure 15, distal end portions of the fibers 27 and 28 contact each other, and the saturable absorber K is disposed between the distal end portions of the fibers 27 and 28. In the fiber structure 15, the laser beam input from the fiber 26 of the output coupler 14 through the fiber 27 is incident on the saturable absorber K.

In a linear region where the incident light intensity is weak, the saturable absorber K absorbs incident light. When the incident light intensity reaches a high level, the absorption of the saturable absorber K decreases, and the incident light transmits through the saturable absorber K. Since an amplitude of the oscillating laser beam temporally fluctuates at a high frequency due to a noise component, light at a high level of incident light intensity is transmitted without being absorbed by the saturable absorber K, and becomes the pulse light. In the supercontinuum light source 10, the pulse light is superimposed on circulating continuous light, stimulated emission is promoted, the intensity increases, and the pulse light further easily transmits through the saturable absorber K. While the pulse light circulates while growing in this manner, the pulse light is generated by the saturable absorption characteristic of the saturable absorber K, a fiber nonlinear effect, and a wavelength dispersion effect. The fiber structure 15 outputs the laser beam as the pulse light transmitted through the saturable absorber K to the fiber 29 through the fiber 28.

In the present embodiment, the fiber structure 15 includes a first fiber connector 31A provided at an end portion of the fiber 27 and a first fiber connector 31B provided at an end portion of the fiber 28. The wavelength division multiplexing coupler 12 has a second fiber connector 32B provided at an end portion of the fiber 29. The output coupler 14 has a second fiber connector 32A provided at an end portion of the fiber 26. The first fiber connector 31A and the second fiber connector 32A can be connected via an adapter 79. The first fiber connector 31B and the second fiber connector 32B can be connected via an adapter 79.

That is, the fiber structure 15 constituting a first optical element and the output coupler 14 constituting a second optical element can be optically connected via the first fiber connector 31A and the second fiber connector 32A. Thus, the fiber 27 connected to the fiber structure 15 and the fiber 26 connected to the output coupler 14 can be optically connected. Further, the fiber structure 15 constituting the first optical element and the wavelength division multiplexing coupler 12 constituting the second optical element can be optically connected via the first fiber connector 31B and the second fiber connector 32B. Thus, the fiber 28 connected to the fiber structure 15 and the fiber 29 connected to the wavelength division multiplexing coupler 12 can be optically connected.

The fiber structure 15 is housed in a module housing 61 and modularized as a fiber module 60 for the fiber laser device. The fiber module 60 (module housing 61) for the fiber laser device is configured to be detachable from the supercontinuum light source 10. Note that the "module" means, for example, one or a plurality of elements (parts and devices) grouped together in terms of function or configuration.

Next, configuration of the supercontinuum light source 10 will be specifically described.

In the following description, a "front-rear direction" ("front" and "rear") is for convenience based on an illustrated direction. An "up-down direction" ("up" and "down") is a direction perpendicular to the front-rear direction, and is for convenience based on the illustrated direction. A direction perpendicular to both the front-rear direction and the up-down direction is also referred to as a "width direction ".

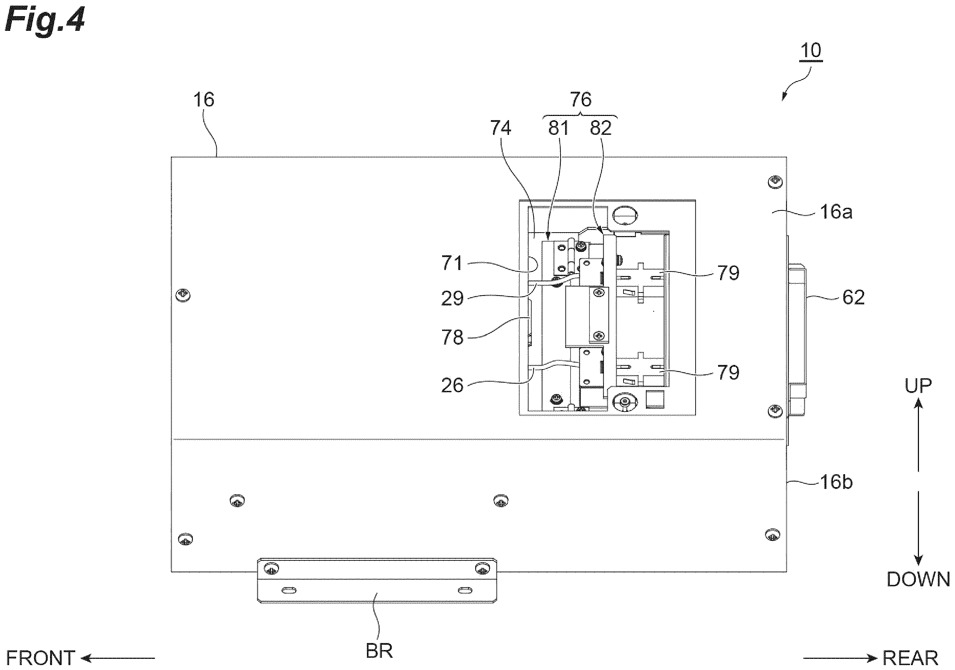

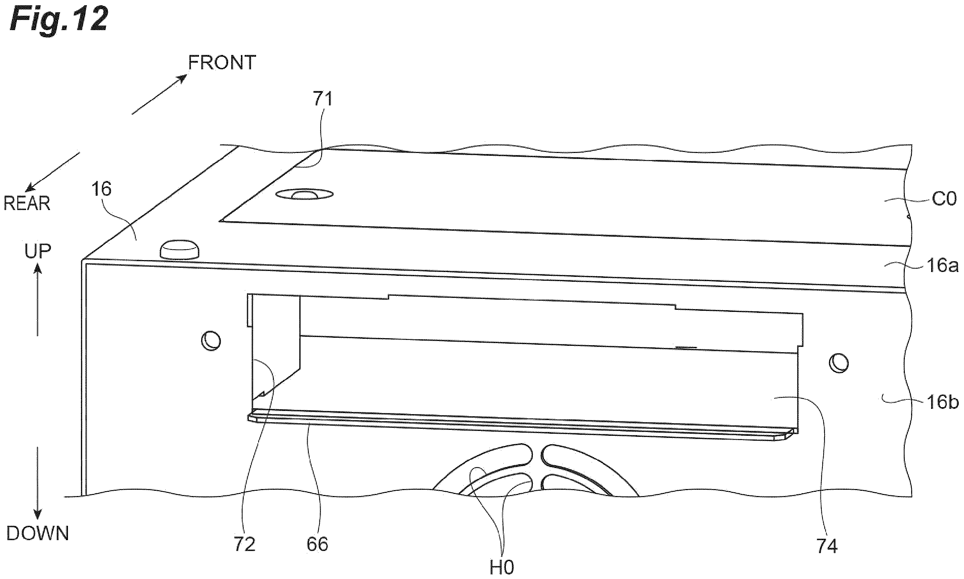

As illustrated in FIGS. 4, 5, and 6, in the supercontinuum light source 10, the housing 16 has a rectangular box shape elongated in the front-rear direction. A bracket BR for mounting the supercontinuum light source 10 is fixed to a lower portion of a side wall of the housing 16. A first opening 71 is formed in an upper wall 16a of the housing 16. The upper wall 16a is a wall portion facing and adjacent to a movable holder 76 described later in the housing 16. Here, the first opening 71 is formed at a position close to rear from a center in the front-rear direction of the upper wall 16a of the housing 16. The first opening 71 penetrates the housing 16 in the up-down direction so as to communicate an inside and an outside of the housing. The first opening 71 has a rectangular shape. A cover C0 (see FIG 12) is detachably attached to the first opening 71 so as to close the first opening 71. During operation of the supercontinuum light source 10 (when the laser beam is oscillated), the first opening 71 is closed by the cover C0.

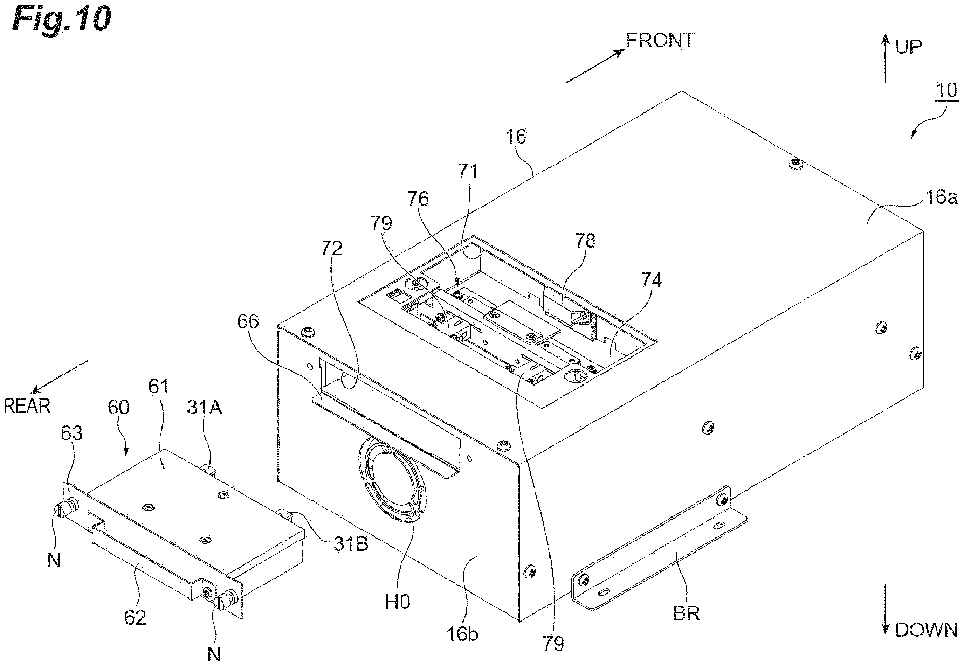

As illustrated in FIG 10, a second opening (an opening) 72 is formed in a rear wall (a wall portion) 16b of the housing 16. Here, the second opening 72 is formed in an upper portion of the rear wall 16b of the housing 16. The second opening 72 penetrates the housing 16 in the front-rear direction so as to communicate the inside and the outside of the housing. The second opening 72 has a rectangular shape elongated in the width direction. The second opening 72 constitutes an attachment port through which the fiber module 60 for the fiber laser device is inserted in the housing 16.

As illustrated in FIGS. 4, 5, and 6, the supercontinuum light source 10 includes a first partition plate (partition plate) 73, a second partition plate (support plate) 74, a fan 75, the movable holder 76, a holding portion 78, and an adapter 79 in the housing 16. The first partition plate 73 is a plate-like member that partitions an inside of the housing 16 vertically, and is fixed to the housing 16 with a screw or the like. The first partition plate 73 partitions the inside of the housing 16 into a first space R1 on the lower side and a second space R2 above the first space R1. The second partition plate 74 is a plate-like member that partitions the second space R2 in the housing 16 vertically, and is fixed to the housing 16 with a screw or the like. The second partition plate 74 partitions the second space R2 into a lower second space R21 on the lower side and an upper second space R22 above the lower second space R21. The fan 75 pumps air in the first space R1. The fan 75 is fixed to a rear portion of the first space R1 in the housing 16. The fan 75 pumps the air sucked into an intake port H0 from the outside to the front. For example, an axial fan is used as the fan 75.

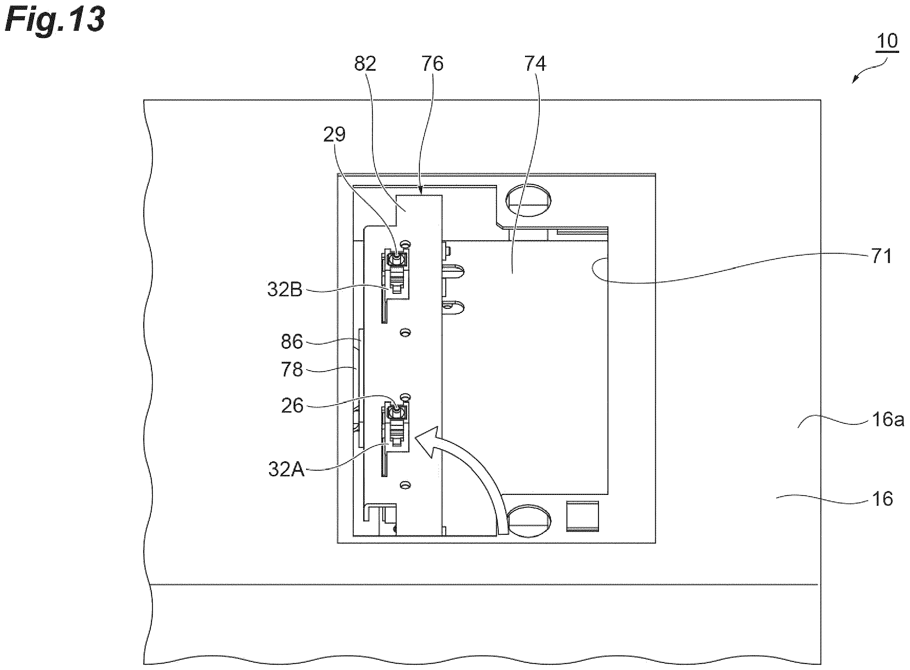

The movable holder 76 is disposed in the housing 16. The movable holder 76 is provided on the second partition plate 74 (in the upper second space R22) in the housing 16. As illustrated in FIGS. 4 and 13, the movable holder 76 holds the second fiber connectors 32A and 32B and is movable so that orientations of the second fiber connectors 32A and 32B change between a first orientation and a second orientation. The orientations of the fiber connectors 32A and 32B correspond to, for example, optical axis directions of the end portions of the fibers 29 and 26 on which the fiber connectors 32A and 32B are provided. The movable holder 76 can be manually operated, for example, by a user.

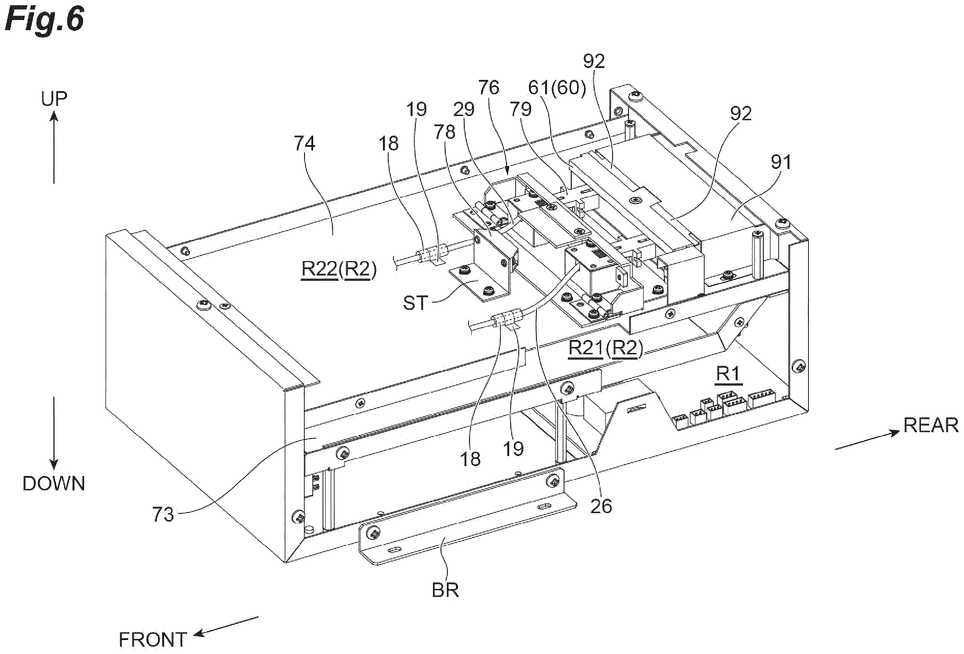

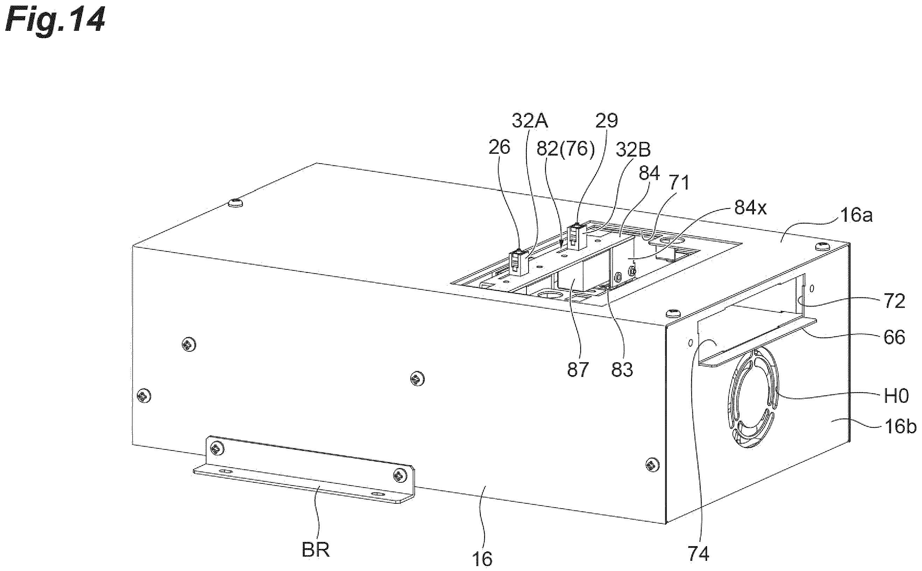

As illustrated in FIGS. 4 and 6, the first orientation is a orientation of the second fiber connectors 32A and 32B when the fiber structure 15, the wavelength division multiplexing coupler 12, and the output coupler 14 are optically connected to each other (that is, in a state where the fiber module 60 for the fiber laser device is attached.). The first orientation is a orientation along the second partition plate 74. The first orientation is rearward. As illustrated in FIGS. 13 and 14, the second orientation is a orientation of the second fiber connectors 32A and 32B that expose end surfaces of the fibers 29 and 26 through the first opening 71. The second orientation is a orientation perpendicular to the second partition plate 74. The second orientation is upward. Being exposed through the first opening 71 means, for example, appearing from the first opening 71, being visible from the first opening 71, and being exposed from the first opening 71. When the movable holder 76 moves so that the orientation of the second fiber connectors 32A and 32B are the second orientation, the end surfaces of the fibers 29 and 26 are projected outward from the first opening 71, and the end surfaces of the fibers 29 and 26 are located outside the housing 16 through the first opening 71.

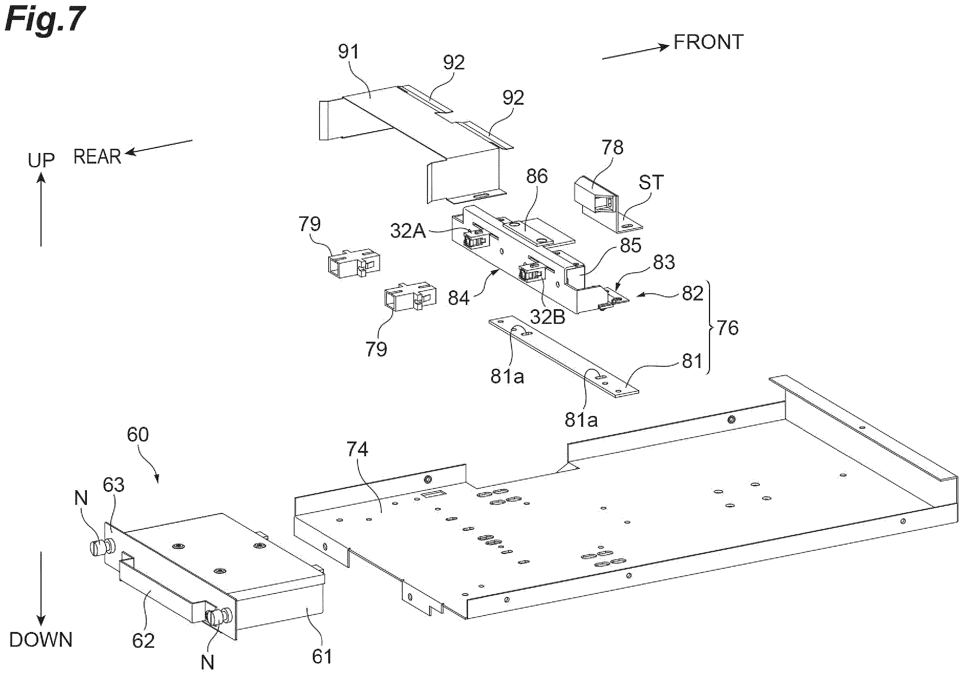

As illustrated in FIG 7, the movable holder 76 includes a fixing member 81 fixed on the second partition plate 74 in the housing 16 (see FIG 4), and a swing member 82 connected to the fixing member 81 via a hinge 83. In the hinge 83, one hinge plate side is swingable relative to the other hinge plate side about a swing shaft 83x along the width direction. A structure of the hinge 83 here is a looseness free (minimized) structure. The fixing member 81 is a plate-like member. The fixing member 81 has a thickness direction in the up-down direction and extends in the width direction. A long hole 81a elongated in the front-rear direction is formed in the fixing member 81. The fixing member 81 is fixed to the second partition plate 74 with a screw through the long hole 81a. That is, the fixing member 81 is fixed movable in the front-rear direction in the housing 16. One hinge plate sides of hinges 83 are attached to both end portions in the width direction of the fixing member 81.

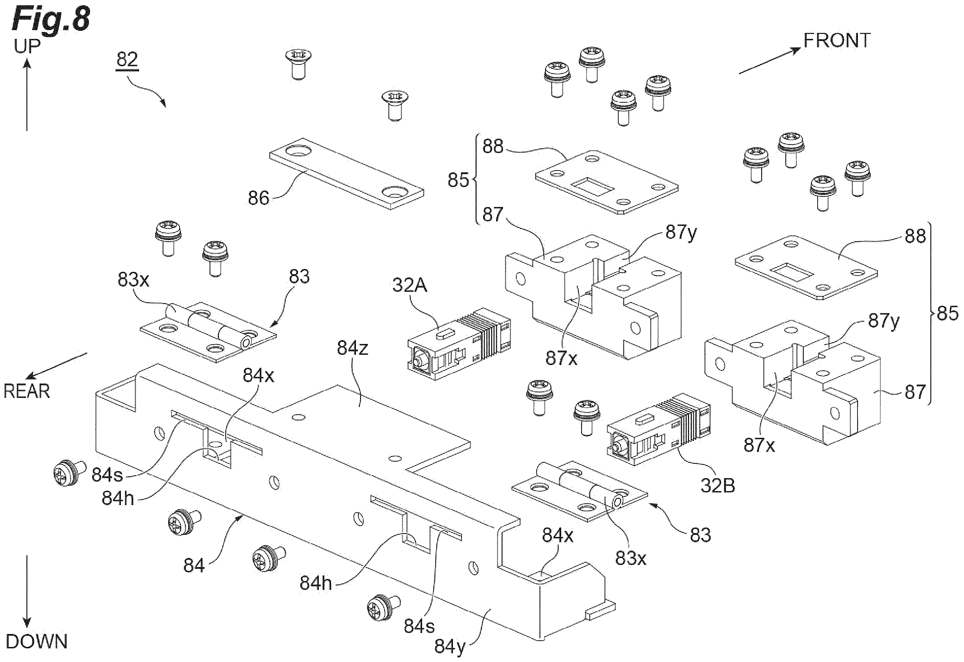

As illustrated in FIGS. 7 and 8, the swing member 82 is a member swingable with respect to the fixing member 81 about the swing shaft 83x of the hinge 83. The swing member 82 is provided with the second fiber connectors 32A and 32B. As illustrated in Fig. 8, the swing member 82 includes a base plate 84, a pair of connector attachment portions 85, and a magnetic plate 86.

The base plate 84 is a bent plate-like member, and includes a bottom plate 84x, a side plate 84y, and an upper plate 84z. A pair of the bottom plates 84x is provided and has a flat plate shape. The other hinge plate side of the hinge 83 is attached to the bottom plate 84x. The side plate 84y is provided perpendicular to the bottom plate 84x. The side plate 84y has a dimension corresponding to the fixing member 81 in the width direction. In the side plate 84y, a pair of rectangular holes 84h through which the second fiber connectors 32A and 32B are inserted is formed apart from each other in the width direction. In the side plate 84y, a pair of slits 84s through which an attachment plate 88 to be described later is inserted is formed apart from each other in the width direction. The rectangular hole 84h and the slit 84s communicate with each other. The upper plate 84z is provided perpendicular to the side plate 84y and has a flat plate shape. The magnetic plate 86 is fixed to the upper plate 84z.

The connector attachment portion 85 includes a main body portion 87 and an attachment plate 88. The main body portion 87 has a block-shaped outer shape. The main body portion 87 is fixed to the side plate 84y of the base plate 84 with a screw. A recess 87x into which the second fiber connector 32A is fitted is formed in the main body portion 87. The recess 87x communicates with the rectangular hole 84h of the side plate 84y. Further, a groove 87y through which the fiber 29 is inserted is formed in the main body portion 87. The groove 87y communicates with the recess 87x. The attachment plate 88 is fixed to the main body portion 87 with a screw so as to close the recess 87x and the groove 87y.

The magnetic plate 86 is fixed to the upper plate 84z of the base plate 84 with a screw. The magnetic plate 86 is formed of a magnetic material. That is, at least a part of the movable holder 76 is formed of the magnetic material. The magnetic plate 86 is a member connectable to the holding portion 78 by magnetic force. The magnetic plate 86 has a plate shape elongated in the width direction.

As illustrated in FIGS. 4 and 6, the holding portion 78 is provided in the housing 16. The holding portion 78 is fixed on the second partition plate 74 via a stay ST. The holding portion 78 is formed of the magnetic material. When the movable holder 76 is moved so that the orientation of the second fiber connectors 32A and 32B are the second orientation, the holding portion 78 can be connected to the magnetic plate 86 of the movable holder 76 by magnetic force (see FIG 13). Thus, the movable holder 76 is held to maintain the second orientation by the magnetic force of the holding portion 78.

The adapter 79 is provided between the first fiber connector 31A and the second fiber connector 32A. The first fiber connector 31A is inserted and engaged in the adapter 79 and the second fiber connector 32A is inserted and engaged in the adapter 79 so that the first fiber connector 31A and the second fiber connector 32A (that is, the end portion of the fiber 27 and the end portion of the fiber 26) are optically connected. Further, the adapter 79 is provided between the first fiber connector 31B and the second fiber connector 32B. The first fiber connector 31B is inserted and engaged in the adapter 79 and the second fiber connector 32B is inserted and engaged in the adapter 79 so that the first fiber connector 31B and the second fiber connector 32B (that is, the end portion of the fiber 28 and the end portion of the fiber 29) are optically connected.

Fiber tubes 18 are provided near the movable holder 76 in the housing 16. The fiber tube 18 is a cylindrical member having flexibility. The fiber tube 18 is fixed onto the second partition plate 74 by a tape material 19. The fibers 26 and 29 are inserted through the fiber tubes 18. Thus, the fibers 26 and 29 are fixed onto the second partition plate 74 via the fiber tubes 18 near the movable holder 76. As the tape material 19, for example, a polyimide tape is used.

As illustrated in FIGS. 6, 9, and 10, the supercontinuum light source 10 of the present embodiment includes the fiber module 60 for the fiber laser device in which the fiber structure 15 is modularized. The fiber module 60 for the fiber laser device includes the module housing 61, the fiber structure 15, and a grip portion 62.

The module housing 61 has a rectangular box shape. The module housing 61 houses the fiber structure 15. Here, the fiber structure 15 is disposed in a center portion of the module housing 61. A connector holding portion 64 is provided on one end side in the module housing 61. The connector holding portion 64 holds the first fiber connectors 31A and 31B such that the first fiber connectors 31A and 31B and end portions of the fibers 27 and 28 project outward from the module housing 61. A rectangular plate-shaped back plate 63 is fixed to a rear surface of the module housing 61, and the grip portion 62 is provided on a rear surface of the back plate 63. The module housing 61 is detachably attached inside the housing 16 through the second opening 72. The module housing 61 is inserted through the second opening 72 from the front side (one side in a predetermined direction) of the module housing 61.

In the module housing 61, the fibers 27 and 28 are fixed on the other end portion side (a side opposite to a side where the first fiber connectors 31A and 31B and the end portions of the fibers 27 and 28 project from the module housing 61) of the module housing 61. Specifically, in the module housing 61, straight portions, which are linearly extending portions of the fibers 27 and 28, are fixed on the other end portion side of the module housing 61. The fibers 27 and 28 are fixed at portions in contact with an inner surface of the module housing 61. Fixing of the fibers 27 and 28 is achieved by adhering a tape material 65. As the tape material 65, for example, the polyimide tape is used. In an illustrated example, a plurality of portions of the fibers 27 and 28 away from each other are adhered to the inner surface of the module housing 61 by the tape material 65.

The grip portion 62 is a portion gripped by the user. The grip portion 62 is provided to project from an outer surface of the rear wall 16b of the housing 16 in a state where the module housing 61 is attached inside the housing 16. The grip portion 62 is, for example, a U-shaped member as viewed in the up-down direction. The grip portion 62 is gripped by inserting a hand in the up-down direction. In the illustrated example, the grip portion 62 extends rearward from one end side in the width direction of the back plate 63, bends in the width direction and extends in the width direction, and then bends forward to reach the other end side in the width direction of the back plate 63.

When such a module housing 61 is attached inside the housing 16, for example, the grip portion 62 is gripped and the module housing 61 is inserted from the second opening 72 of the housing 16. The module housing 61 is placed on an upper surface (a placement surface) of the second partition plate 74, the module housing 61 is moved forward while a lower surface of the module housing 61 is slid on the upper surface of the second partition plate 74, and the back plate 63 is brought into contact with a rear surface of the housing 16. At this time, the first fiber connectors 31A and 31B are inserted into the adapter 79, the fiber structure 15 and the wavelength division multiplexing coupler 12 are optically connected via the first fiber connector 31A and the second fiber connector 32A, and the fiber structure 15 and the output coupler 14 are optically connected via the first fiber connector 31B and the second fiber connector 32B. Then, the back plate 63 is attached to the housing 16 by a screw N. Thus, attachment of the module housing 61 is completed.

On the other hand, when the module housing 61 is removed from inside the housing 16, the screw N is removed, the grip portion 62 is gripped, and the module housing 61 is moved rearward while sliding the lower surface of the module housing 61 on the upper surface of the second partition plate 74. The first fiber connectors 31A and 31B are removed from the adapter 79, and optical connections between the fiber structure 15 and the wavelength division multiplexing coupler 12 and the output coupler 14 are released. Then, the module housing 61 is pulled out from the second opening 72. Thus, removal of the module housing 61 is completed.

The module housing 61 has a shape in which an upper side (one side in the first direction) is different from a lower side (the other side in the first direction) when viewed from the front-rear direction (predetermined direction). Specifically, when viewed from the front-rear direction, the module housing 61 has a shape in which a dimension in the width direction of an upper end portion thereof is larger than that in the width direction of the other portion. As illustrated in FIG 12, the second opening 72 corresponds to the shape of the module housing 61. The second opening 72 has a shape in which an upper side is different from a lower side when viewed from the front-rear direction. Specifically, when viewed from the front-rear direction, the second opening 72 has a shape in which a dimension in the width direction of an upper end portion thereof is larger than that in the width direction of the other portion.

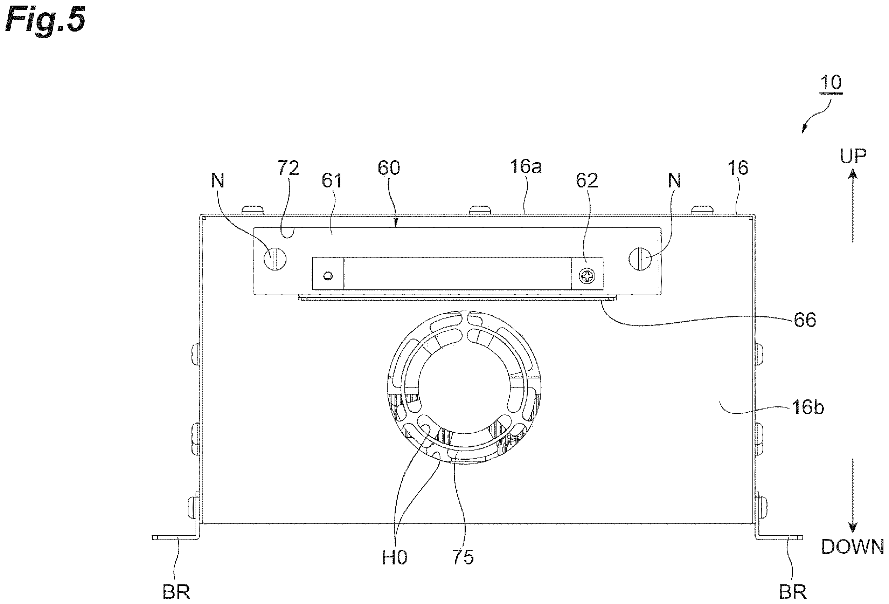

As illustrated in FIGS. 5 and 10, on the outer surface of the rear wall 16b of the housing 16, a projecting portion 66 projecting rearward is provided at a lower portion of a side edge of the second opening 72. The projecting portion 66 has a plate shape whose thickness direction is the up-down direction. Such a projecting portion 66 covers at least a part of a periphery of the grip portion 62 projecting from the outer surface of the rear wall 16b of the housing 16. The projecting portion 66 constitutes an eave provided below the second opening 72. The projecting portion 66 closes the grip portion 62 from below and inhibits insertion of the hand into the grip portion 62 from the up-down direction.

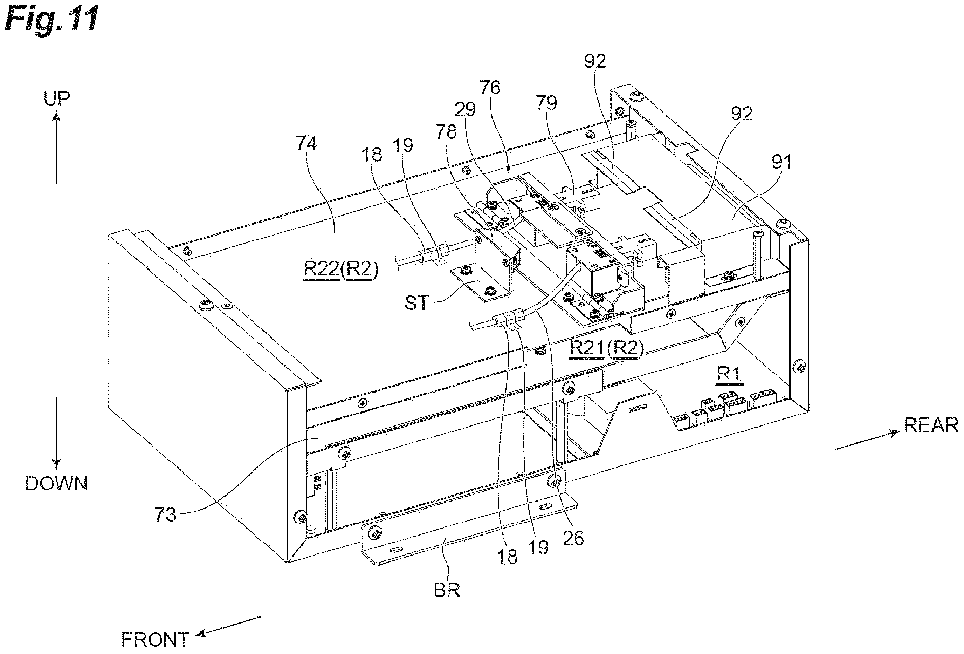

As illustrated in FIGS. 6 and 11, the supercontinuum light source 10 includes a module guide 91 and an elastic member 92. The module guide 91 is a member that guides forward and backward movement of the module housing 61 entering the housing 16 through the second opening 72. The module guide 91 is fixed to a rear end portion on the second partition plate 74. The module guide 91 is a gate-shaped member that forms a space along an outer shape of the module housing 61. The module guide 91 is a plate member bent to form an inverted U shape when viewed from the rear. The elastic member 92 is, for example, a leaf spring. The elastic member 92 presses an upper surface of the module housing 61 entering the housing 16 through the second opening 72 downward toward the upper surface of the second partition plate 74. A pair of the elastic members 92 is provided on the front side of an upper portion of the module guide 91 so as to be separated from each other in the width direction.

Next, an example of performing maintenance (observation, cleaning, and the like) on the end surfaces of the fibers 26 and 29 in the supercontinuum light source 10 will be described.

As illustrated in FIGS. 13 and 14, the movable holder 76 is moved in a state where the module housing 61 is removed from inside the housing 16, to change the orientation of the second fiber connectors 32A and 32B from rearward to upward. Specifically, a rear side of the swing member 82 is lifted, and the swing member 82 is swung by 90° with respect to the fixing member 81 about the swing shaft 83x of the hinge 83. Thus, a state in which the second fiber connectors 32A and 32B extend in the front-rear direction is changed to a state in which the second fiber connectors 32A and 32B rise in the up-down direction. The end surfaces of the fibers 29 and 26 project outward from the first opening 71, and the end surfaces of the fibers 29 and 26 are located outside the housing 16 through the first opening 71. In addition, the magnetic plate 86 of the swing member 82 is connected to the holding portion 78 by magnetic force, and a state of the movable holder 76 is held in which the second fiber connectors 32A and 32B face upward.

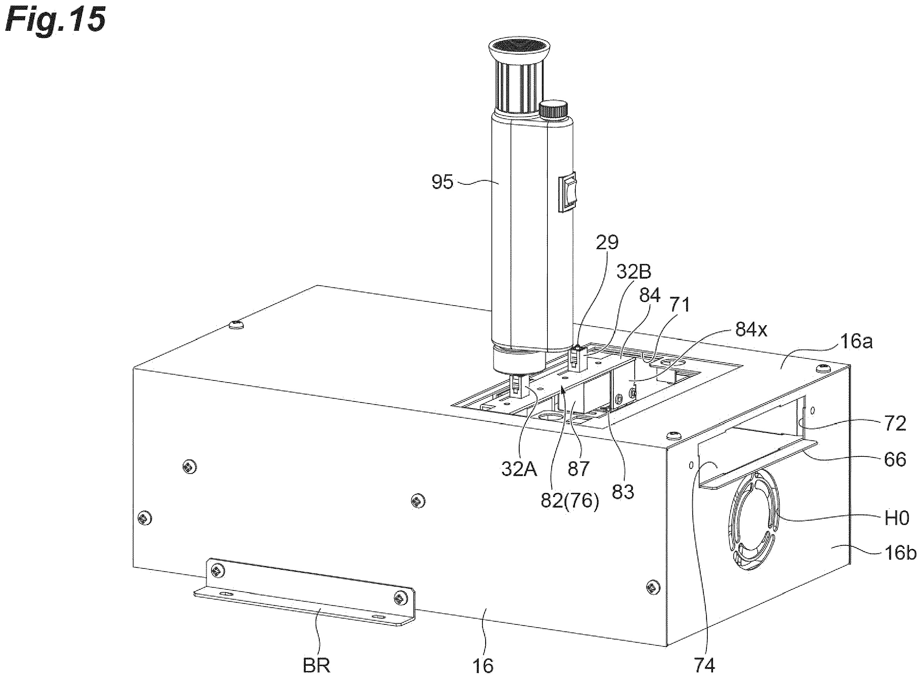

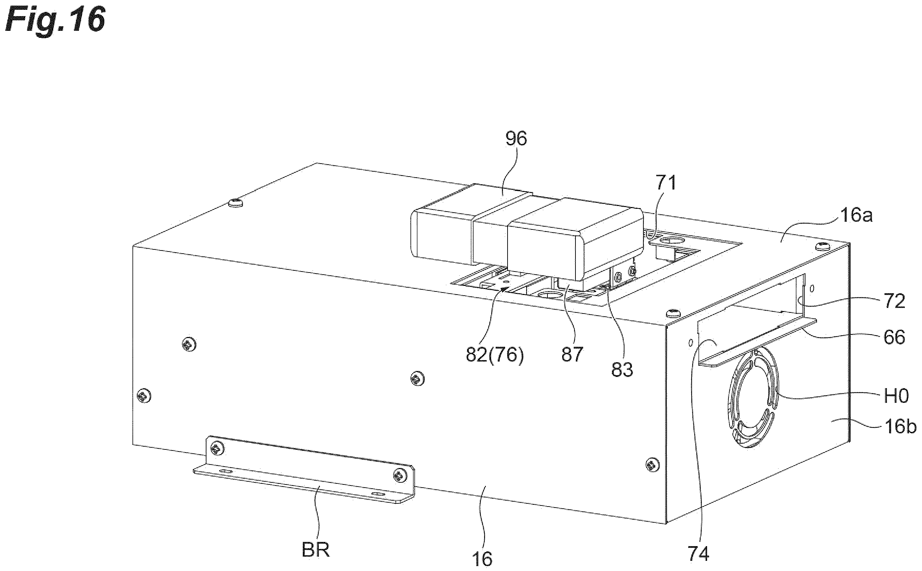

Then, as illustrated in FIG 15, a fiberscope 95 is installed, the end surfaces of the fibers 29 and 26 are observed with the fiberscope 95, and for example, it is checked that there is no foreign matter or dirt on the end surfaces of the fibers 29 and 26. Further, as illustrated in FIG 16, the end surfaces of the fibers 29 and 26 are cleaned by a cleaner 96.

After the end surfaces of the fibers 29 and 26 are observed and cleaned, the movable holder 76 is moved to change the orientations of the second fiber connectors 32A and 32B from upward to rearward. Specifically, connection between the magnetic plate 86 and the holding portion 78 by magnetic force is released, the rear side of the swing member 82 is tilted backward, and the swing member 82 is swung by 90° with respect to the fixing member 81 about the swing shaft 83x of the hinge 83. Thus, the state in which the second fiber connectors 32A and 32B rise in the up-down direction is changed to the state in which the second fiber connectors 32A and 32B extend in the front-rear direction. The module housing 61 is attached to the housing 16, and the fiber structure 15, the wavelength division multiplexing coupler 12, and the output coupler 14 are optically connected via the first fiber connectors 31A and 31B and the second fiber connectors 32A and 32B. Thus, the maintenance is completed.

As described above, in the supercontinuum light source 10 of the present embodiment, the end surfaces of the fibers 29 and 26 can be exposed through the first opening 71 by moving the movable holder 76 and setting the orientation of the second fiber connectors 32A and 32B, for example, from the first orientation to the second orientation. Thus, for example, the end surfaces of the fibers 29 and 26 can be easily observed with the fiberscope 95, and the end surfaces of the fibers 29 and 26 can be easily cleaned with the cleaner 96. Therefore, the maintenance on the end surfaces of the fibers 29 and 26 can be easily performed. The end surfaces of the fibers 29 and 26 can be accessed without drawing the fibers 29 and 26. It is possible to avoid problems such as disconnection caused by drawing the fibers 29 and 26.

In the supercontinuum light source 10, the movable holder 76 is movable so that the orientation of the second fiber connectors 32A and 32B changes between the first orientation along the second partition plate 74 and the second orientation perpendicular to the second partition plate 74. In this case, since the movable holder 76 is movable so that the orientation of the second fiber connectors 32A and 32B changes by 90°, the orientation of the second fiber connectors 32A and 32B can be switched between the first orientation and the second orientation.

In the supercontinuum light source 10, the first opening 71 is formed in the upper wall 16a facing and adjacent to the movable holder 76 in the housing 16. In this case, the movable holder 76 can be easily accessed through the first opening 71. In the supercontinuum light source 10, the fiber structure 15 constituting the first optical element includes the saturable absorber K. In this case, the saturable absorber K can be utilized as the first optical element.

In the supercontinuum light source 10, the fiber structure 15 including the saturable absorber K is modularized as the fiber module 60 for the fiber laser device and detachably attached inside the housing 16. In this case, for example, the maintenance on the end surfaces of the fibers 26 and 29 can be performed by removing the fiber module 60 for the fiber laser device.

In the supercontinuum light source 10, the fiber structure 15 is housed in the module housing 61. The second opening 72 is formed in the rear wall 16b of the housing 16. The module housing 61 is detachably attached inside the housing 16 through the second opening 72. Thus, the fiber structure 15 can be modularized, and the modularized fiber structure 15 can be attached and detached using the second opening 72 of the housing 16.

In the supercontinuum light source 10, the module housing 61 is inserted through the second opening 72 from the front side. The module housing 61 has a shape in which an upper side is different from a lower side when viewed from the front-rear direction. The second opening 72 corresponds to the shape of the module housing 61 (the shape in which the upper side is different from the lower side when viewed from the front-rear direction). Thus, when the module housing 61 is turned upside down and inserted into the second opening 72, since the module housing 61 interferes with the side edge of the second opening 72, the module housing 61 cannot be inserted through the second opening 72. Therefore, it is possible to prevent the module housing 61 from being turned upside down and inserted into the second opening 72. It is possible to prevent damage to the first fiber connectors 31A and 31B, the second fiber connectors 32A and 32B, and the adapter 79 due to erroneous attachment in the up-down direction by defining the up-down direction when the module housing 61 is attached.

The supercontinuum light source 10 includes the elastic member 92 that presses the module housing 61 toward the upper surface of the second partition plate 74 on which the module housing 61 is placed. In this case, the elastic member 92 can press the module housing 61 against the upper surface of the second partition plate 74.

The supercontinuum light source 10 includes the grip portion 62 provided in the module housing 61. The grip portion 62 is provided to project from an outer surface of the rear wall 16b of the housing 16 in a state where the module housing 61 is attached inside the housing 16. The projecting portion 66 that covers a lower portion of the grip portion 62 projecting is provided on the outer surface of the rear wall 16b of the housing 16. When the grip portion 62 is used (for example, gripped and moved) in the state where the module housing 61 is attached inside the housing 16, there is a possibility that the module housing 61 is displaced. As a result, there is a possibility of characteristic change and failure of the supercontinuum light source 10. In this regard, in the supercontinuum light source 10, in the state where the module housing 61 is attached inside the housing 16, the grip portion 62 can be hardly gripped by the projecting portion 66, and use of the grip portion 62 can be suppressed. This makes it possible to prevent positional displacement of the module housing 61.

In the supercontinuum light source 10, when the movable holder 76 is moved so that the orientation of the second fiber connectors 32A and 32B are the second orientation, the end surfaces of the fibers 26 and 29 are located outside the housing 16 through the first opening 71. In this case, the maintenance on the end surfaces of the fibers 26 and 29 can be further easily performed.

In the supercontinuum light source 10, the movable holder 76 includes the magnetic plate 86 formed of the magnetic material. In the housing 16, the holding portion 78 formed of the magnetic material is provided. When the movable holder 76 is moved so that the orientation of the second fiber connectors 32A and 32B are the second orientation, the movable holder 76 is held to maintain the second orientation by the magnetic force of the holding portion 78. In this case, it is possible to maintain a state in which the end surfaces of the fibers 26 and 29 are exposed through the first opening 71 by using the magnetic force.

The supercontinuum light source 10 includes the fiber tube 18 fixed near the movable holder 76 in the housing 16. The fibers 26 and 29 are inserted through the fiber tubes 18. When the fibers 26 and 29 are directly fixed near the movable holder 76, although vibrations of the fibers 26 and 29 can be suppressed, the fibers 26 and 29 also tend to move greatly along with movement of the movable holder 76, and there is a possibility that the fibers 26 and 29 are bent due to the movement and performance is adversely affected (for example, mode lock may be affected). In this regard, in the supercontinuum light source 10, since the fibers 26 and 29 are fixed near the movable holder 76 through the fiber tube 18, the vibrations of the fibers 26 and 29 can be suppressed, and even when the fibers 26 and 29 move along with the movement of the movable holder 76, the movement can be allowed, and bending of the fibers 26 and 29 can be suppressed.

In the supercontinuum light source 10, the movable holder 76 is fixed to the second partition plate 74 through the long hole 81a (see FIG 7), and is fixed movable in the front-rear direction in the housing 16. Thus, position of the movable holder 76 in the front-rear direction can be adjusted. Note that instead of or in addition to this, the movable holder 76 may be movably fixed in a direction other than the front-back direction, and in this case, the position of the movable holder 76 in the direction other than the front-back direction can be adjusted.

The supercontinuum light source 10 includes the first partition plate 73 that partitions the inside of the housing 16 into the first space R1 and the second space R2, and the fan 75 that pumps the air in the first space R1. The fiber structure 15, the wavelength division multiplexing coupler 12, and the output coupler 14 are arranged in the second space R2. In this case, it is possible to prevent dust or the like from adhering to configurations of the fiber structure 15, the wavelength division multiplexing coupler 12, and the output coupler 14 (for example, the end surfaces of the fibers 26 and 29, and the like) due to influence of the air pumped by the fan 75. It is possible to provide a separation structure in which a portion in which the configurations of the fiber structure 15, the wavelength division multiplexing coupler 12, and the output coupler 14 are arranged and an air-cooled portion by the fan 75 are separated.

The supercontinuum light source 10 includes the adapters 79 that connect the first fiber connectors 31A and 31B and the second fiber connectors 32A and 32B. In this case, the first fiber connectors 31A and 31B and the second fiber connectors 32A and 32B can be reliably connected by the adapters 79.

Further, in the supercontinuum light source 10 of the present embodiment, the fiber structure 15 constituting the first optical element can be modularized, and the modularized fiber structure 15 can be attached and detached using the second opening 72 of the housing 16. Therefore, the fiber structure 15 can be easily replaced. The fiber structure 15 (saturable absorber K) can be modularized and easily replaced.

In the supercontinuum light source 10, the fiber structure 15 includes the saturable absorber K. In this case, the saturable absorber K can be utilized as the first optical element. Since the saturable absorber K needs to be replaced due to the life, an effect of easily replacing the saturable absorber K is particularly effective.

In the fiber module 60 for the fiber laser device, when the fiber structure 15 is optically connected to the wavelength division multiplexing coupler 12 and the output coupler 14 via the first fiber connectors 31A and 31B, for example, the first fiber connectors 31A and 31B move due to looseness of the first fiber connectors 31A and 31B, and the end portions of the fibers 27 and 28 also move according to movement of the first fiber connectors 31A and 31B, which may adversely affect the performance. In this case, in the fiber module 60 for the fiber laser device, since the fibers 27 and 28 are fixed to the module housing 61, movement of the fibers 27 and 28 can be suppressed. At this time, when the fibers 27 and 28 are fixed on one end side (a side close to the first fiber connectors 31A and 31B) in the module housing 61, since fiber lengths are short from the end portions of the fibers 27 and 28 to fixed positions, the fibers 27 and 28 are likely to be greatly displaced by movement of the first fiber connectors 31A and 31B and the end portions of the fibers 27 and 28, and furthermore, the fibers 27 and 28 are likely to be bent, which may adversely affect the performance. In this regard, in the fiber module 60 for the fiber laser device, since the fibers 27 and 28 are fixed on the other end side (a side far from first fiber connectors 31A and 31B) in the module housing 61, the fiber lengths from the end portions of the fibers 27 and 28 to the fixed positions is long. Therefore, it is possible to suppress bending of the fibers 27 and 28 due to the movement of the first fiber connectors 31A and 31B and the end portions of the fibers 27 and 28. Therefore, it is possible to suppress an adverse effect on the performance.

In the fiber module 60 for the fiber laser device, the straight portions, which are linearly extending portions of the fibers 27 and 28, are fixed on the other end portion side in the module housing 61. In this case, the bending of the fibers 27 and 28 can be further suppressed.

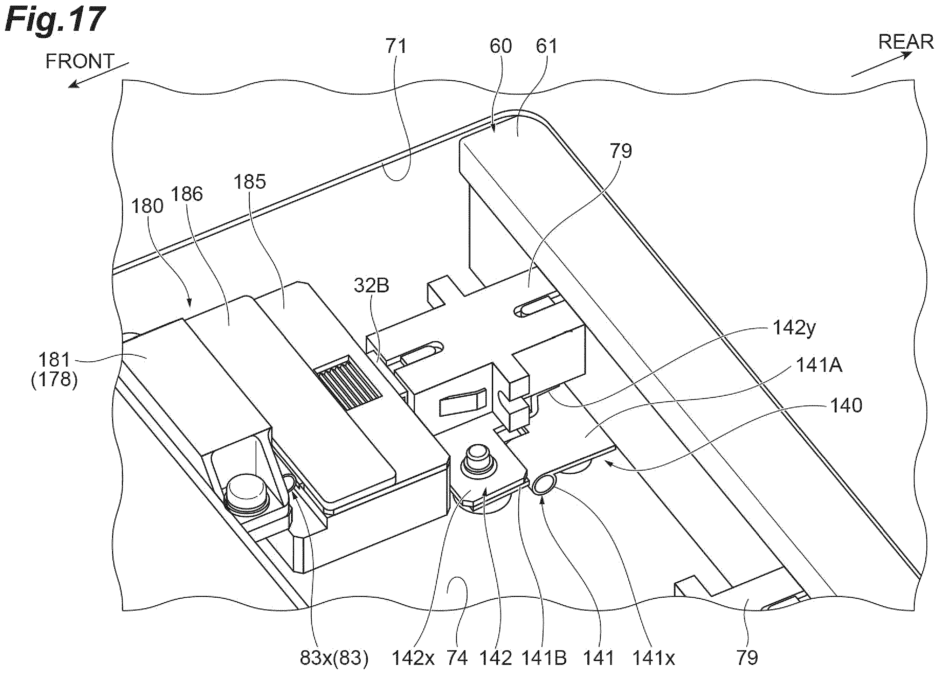

As illustrated in FIGS. 17, 18, and 19, the supercontinuum light source 10 may include a pair of movable holders 180 instead of the movable holder 76 (FIG 4), and may further include an adapter detector 140.

The pair of movable holders 180 is provided corresponding to each of the second fiber connectors 32A and 32B. The pair of movable holders 180 are independently movable. One movable holder 180 holds the second fiber connector 32B and is movable so that the orientation of the second fiber connector 32B changes between the first orientation and the second orientation. The other movable holder 180 holds the second fiber connector 32A and is movable so that the orientation of the second fiber connector 32A changes between the first orientation and the second orientation.

The one movable holder 180 includes a fixing member 181 and a swing member 185 connected to the fixing member 181 via the hinge 83. The fixing member 181 is fixed on the second partition plate 74. One hinge plate side of the hinge 83 is fixed to the fixing member 181. The swing member 185 is a member swingable with respect to the fixing member 81. The other hinge plate side of the hinge 83 is fixed to the swing member 185. The swing member 185 has a block-shaped outer shape. The swing member 185 holds the second fiber connector 32B. A magnetic plate 186 is fixed to an upper surface of the swing member 185. The magnetic plate 186 is configured similarly to the magnetic plate 86 (see FIG 7). The magnetic plate 186 can be connected to a holding portion 178 included in the fixing member 181 by magnetic force. The holding portion 178 is configured similarly to the holding portion 78 (see FIG 7).

In the hinge 83 according to a modification, one hinge plate side and the other hinge plate side are movable by a predetermined length. Thus, the swing member 185 is configured to be movable by a predetermined length in a direction along the swing shaft 83x with respect to the fixing member 181. Note that the predetermined length may be a length corresponding to looseness between one hinge plate side and the other hinge plate side of the hinge 83, and may be, for example, 1 to 2 mm. Since the other movable holder 180 has the same configuration as the one movable holder 180, description thereof will be omitted.

The adapter detector 140 includes a hinge 141 and a tilting plate 142. The hinge 141 tilts the tilting plate 142 about a swing shaft 141x along the width direction. A hinge plate 141A side, which is a fixed side of the hinge 141, is fixed on the second partition plate 74. A hinge plate 141B side, which is a movable side of the hinge 141, is fixed to a flat plate portion 142x described later of the tilting plate 142. In the hinge 141 here, a force of pulling the hinge plate 141B side which is the movable side downward acts. The tilting plate 142 includes the flat plate portion 142x having a flat plate shape and a bent portion 142y continuous to a rear end of the flat plate portion 142x so as to project upward.

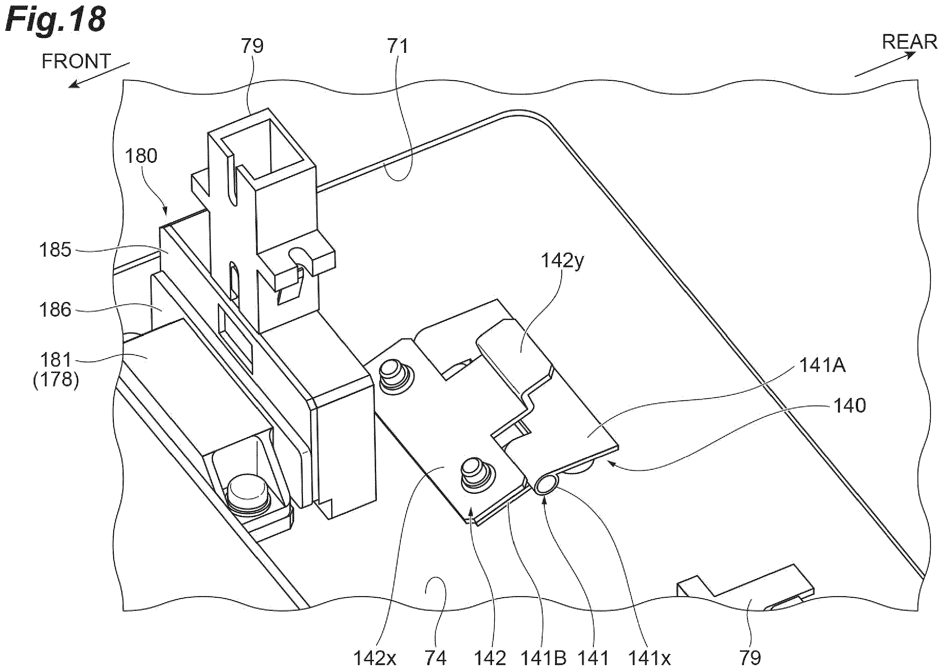

In such an adapter detector 140, as illustrated in FIG 18, in a state where the movable holder 180 is moved so that the orientation of the second fiber connector 32A is the second orientation, the adapter 79 is separated from the bent portion 142y. At this time, the hinge plate 141A of the hinge 141 is pulled downward, the tilting plate 142 is tilted such that the front side is located downward with respect to the rear side, and the bent portion 142y rises. Then, as illustrated in FIG 17, by moving the movable holder 180 so that the orientation of the second fiber connector 32A is the first orientation, the adapter 79 contacts the bent portion 142y, the bent portion 142y is pressed downward, and the tilting plate 142 maintains a state along a horizontal plane. The presence of the adapter 79 can be detected by detecting a state of the tilting plate 142.

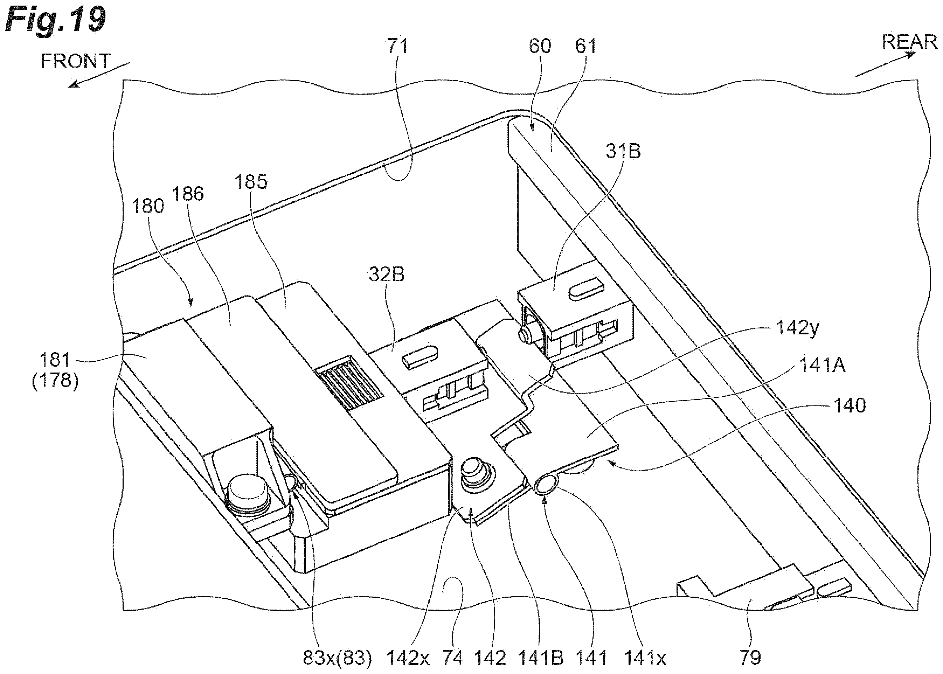

On the other hand, as illustrated in FIG 19, when the adapter 79 is not mounted, since the bent portion 142y cannot be pressed downward, the tilting plate 142 maintains a tilted state. The presence of the adapter 79 can be detected by detecting a state of the tilting plate 142. Further, in this case, the first fiber connector 31A of the fiber module 60 for the fiber laser device is brought into contact with the bent portion 142y, and the forward movement of the module housing 61 can be restricted so that the module housing 61 is not completely inserted forward. In a state where the forward movement of the module housing 61 is restricted, an interlock mechanism (not illustrated) is operated.

As described above, the modification illustrated in FIGS. 17, 18, and 19 includes the adapter detector 140 that detects presence or absence of the adapter 79. In this case, based on a detection result of the adapter detector 140, it is possible to prevent forgetting to attach the adapter 79. In addition, when the adapter 79 is not mounted, the interlock mechanism can be operated. Thus, when the adapter 79 is not mounted, it is possible to prevent the laser beam from being emitted from the fiber module 60 for the fiber laser device. It is possible to prevent malfunction and to enhance safety when the adapter 79 is not mounted.

In the modification, the swing member 185 is movable by the predetermined length in the direction along the swing shaft 83x with respect to the fixing member 181. In this case, when the fiber structure 15 is optically connected to the wavelength division multiplexing coupler 12 and the output coupler 14, even if the first fiber connectors 31A and 31B are shifted from the second fiber connectors 32A and 32B in the direction along the swing shaft 83x, the second fiber connectors 32A and 32B (the fiber module 60 for the fiber laser device) can be moved so as to eliminate the shift. Since the hinge 83 has looseness, even if there is a positional shift between the first fiber connectors 31A and 31B and the second fiber connectors 32A and 32B, the first fiber connectors and the second fiber connectors can be fitted and inserted into the adapters 79.

### [Second Embodiment]

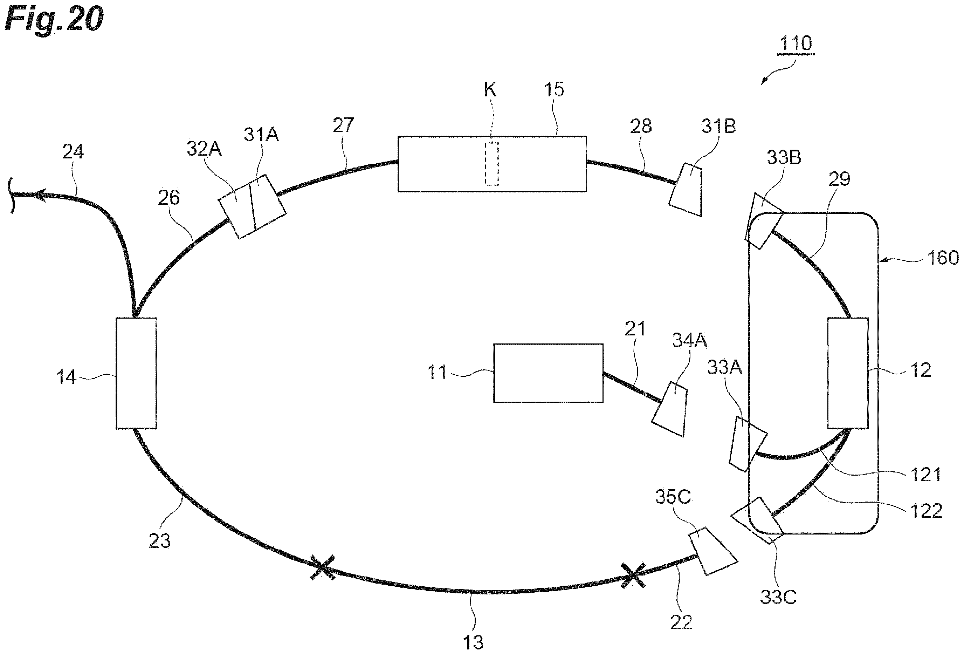

As illustrated in FIG 20, a supercontinuum light source 110 according to a second embodiment is different from the supercontinuum light source 10 (see FIG 2) according to the first embodiment in that the wavelength division multiplexing coupler 12 is modularized as a fiber module 160 for the fiber laser device.

In the present embodiment, the wavelength division multiplexing coupler 12 includes fibers 121, 29, and 122, and fiber connectors 33A, 33B, and 33C provided at end portions of the fibers 121, 29, and 122. The excitation light source 11 includes the fiber 21 and a fiber connector 34A provided at an end portion of the fiber 21. The amplification fiber 13 includes the fiber 22 and a fiber connector 35C provided at an end portion of the fiber 22. The fiber connectors 34A and 33A can be connected to each other, the fiber connectors 31B and 33B can be connected to each other, and the fiber connectors 35C and 33C can be connected to each other.

That is, the wavelength division multiplexing coupler 12 constituting the first optical element and the fiber structure 15 constituting the second optical element can be optically connected via the fiber connectors and 33B and 31B. Further, the wavelength division multiplexing coupler 12 constituting the first optical element and the excitation light source 11 constituting the second optical element can be optically connected via the fiber connectors 33A and 34A. Further, the wavelength division multiplexing coupler 12 constituting the first optical element and the amplification fiber 13 constituting the second optical element can be optically connected via the fiber connectors 33C and 35C. The fiber connectors 33A, 33B, and 33C constitute the first fiber connector, and the fiber connectors 31B, 34A, and 35C constitute the second fiber connector.

Also in the supercontinuum light source 110 and the fiber module 160 for the fiber laser device as described above, the same effects as the above embodiment are obtained.

### [Third Embodiment]

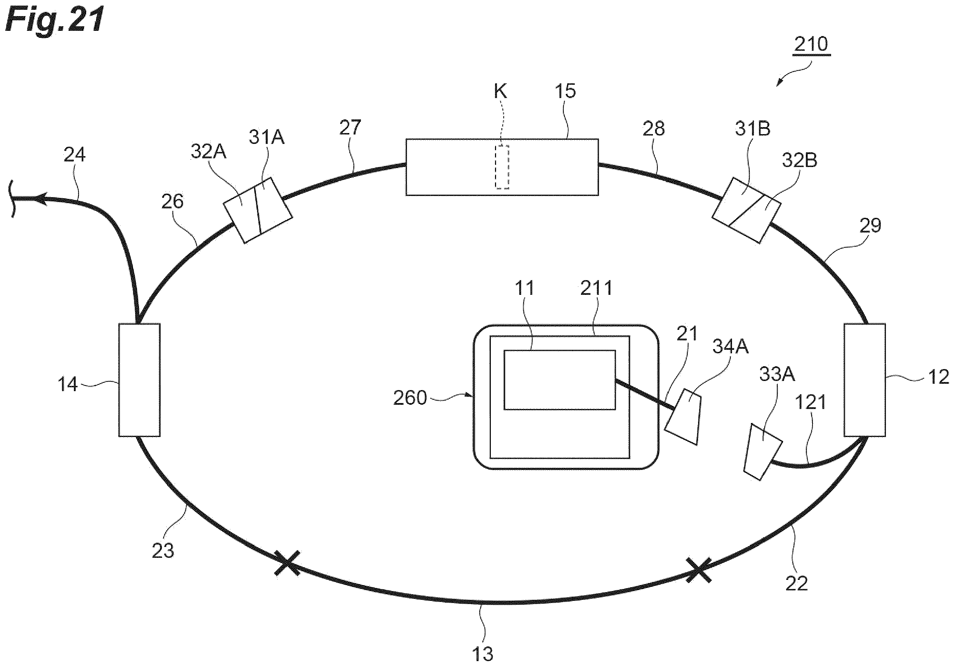

As illustrated in FIG 21, a supercontinuum light source 210 according to a third embodiment is different from the supercontinuum light source 10 (see FIG 2) according to the first embodiment in that the excitation light source 11 is modularized as a fiber module 260 for the fiber laser device.

In the present embodiment, the excitation light source 11 includes the fiber 21 and the fiber connector 34A provided at the end portion of the fiber 21. The wavelength division multiplexing coupler 12 includes the fiber 121 and the fiber connector 33A provided at an end portion of the fiber 121. The fiber connectors 34A and 33A can be connected to each other. That is, the excitation light source 11 constituting the first optical element and the wavelength division multiplexing coupler 12 constituting the second optical element can be optically connected via the fiber connectors 34A and 33A. Note that the fiber module 260 for the fiber laser device has a substrate 211 on which the excitation light source 11 is mounted. The fiber connector 34A constitutes the first fiber connector, and the fiber connector 33A constitutes the second fiber connector.

Also in the supercontinuum light source 210 and the fiber module 260 for the fiber laser device as described above, the same effects as the above embodiments are obtained.

As described above, one aspect of the present disclosure is not limited to the above embodiments, and may be modified within the scope not changing the gist described in each claim, or may be applied to other things.

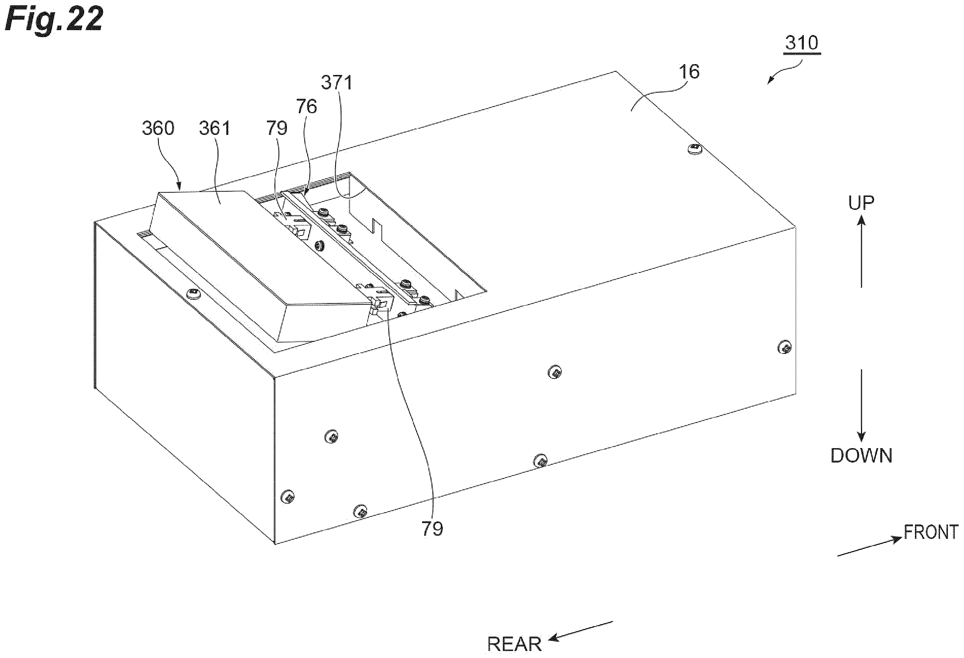

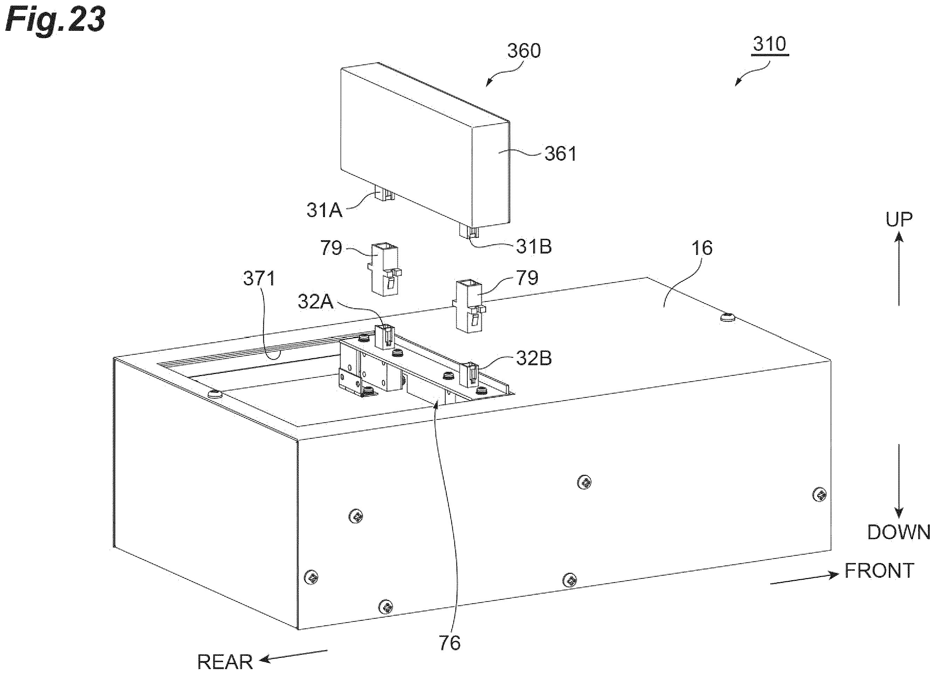

In the above embodiments, the module housing 61 is detachably attached inside the housing 16 through the second opening 72, but the present invention is not limited thereto. For example, as illustrated in FIGS. 22 and 23, a module housing 361 (a fiber module 360 for the fiber laser device) may be a supercontinuum light source 310 detachably attached to the housing 16 through a first opening 371.

The module housing 361 corresponds to the module housing 61 (see FIG 10). First opening 371 corresponds to the first opening 71 (see FIG 10). The first opening 371 has a size that allows the module housing 61 to go out of the housing 16 through the first opening 371 without contacting the housing 16 when the movable holder 76 is moved. For example, in the front-rear direction, a length from a rear edge of the first opening 371 to the movable holder 76 is longer than that of the module housing 61 in the front-rear direction. Note that in the supercontinuum light source 310, the second opening 72 (see FIG 10) is not formed in the housing 16.

In such a supercontinuum light source 310, for example, the movable holder 76 is swung by 90° while the module housing 361 is attached, the module housing 361 projects from the first opening 371, and the second fiber connectors 32A and 32B face upward (the first fiber connectors 31A and 32A face downward). In this state, the module housing 361 can be removed from inside the housing 16 by removing the adapter 79.

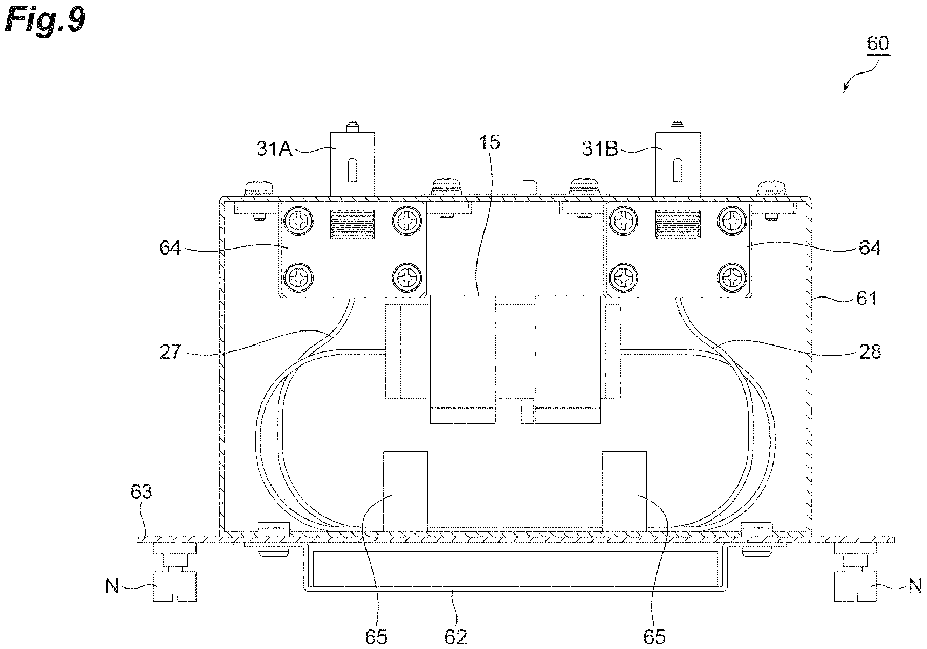

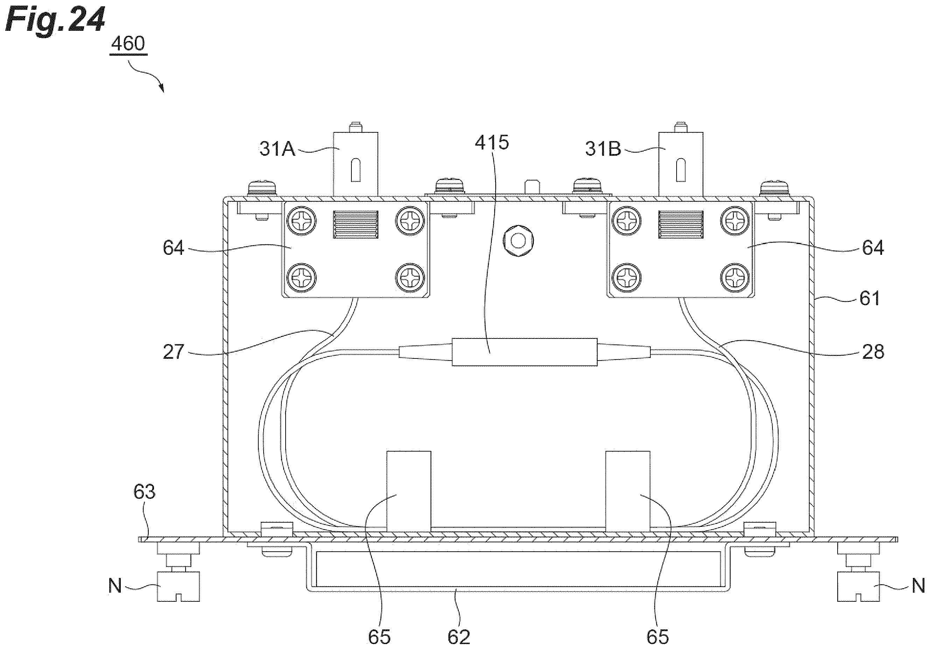

In the above embodiment, instead of the fiber module 60 for the fiber laser device having the fiber structure 15 (see FIG 9), a fiber module 460 for the fiber laser device having an isolator 415 may be provided as illustrated in FIG 24. The isolator 415 includes the saturable absorber K.

In the above embodiments, the first optical element, the second optical element, and the optical element are not particularly limited, and may be various optical elements. In the above embodiments, the first opening 71 or 371 is formed in the upper wall 16a facing and adjacent to the movable holder 76 in the housing 16, but the first opening 71 or 371 may be formed in the wall portion facing or adjacent to the movable holder 76 in the housing 16.

In the above embodiments, the module housing 61 has the shape in which the upper side is different from the lower side when viewed from the front-rear direction, but is not limited thereto, and one side in the width direction may have a shape different from the other side when viewed from the front-rear direction. In short, the module housing 61 may have a shape in which one side in a first direction perpendicular to the front-rear direction is different from the other side when viewed from the front-rear direction.

In the above embodiments, the projecting portion 66 that covers the lower portion of the grip portion 62 is provided on the outer surface of the housing 16, but the projecting portion 66 only needs to cover at least a part of the periphery of the grip portion 62 projecting. In the above embodiments, the first fiber connector 31A and the second fiber connector 32A are connected via the adapter 79, but the adapter 79 may be omitted in some cases.

In the above embodiments, when the movable holder 76 moves so that the orientation of the second fiber connectors 32A and 32B are the second orientation, the end surfaces of the fibers 29 and 26 are projected outward from the first opening 71, and the end surfaces of the fibers 29 and 26 are located outside the housing 16 through the first opening 71, but the present invention is not limited thereto. When the movable holder 76 moves so that the orientation of the second fiber connectors 32A and 32B are the second orientation, if the end surfaces of the fibers 29 and 26 are exposed from the first opening 71, the end surfaces of the fibers 29 and 26 may be located in the housing 16.

In the above embodiments, when the screw N (see FIG 10) for attaching the module housing 61 or 361 to the housing 16 is left unfastened, the interlock mechanism may be operated to prevent the laser beam from being emitted from the fiber module 60 for the fiber laser device.

The above embodiments may further include a lock mechanism that prevents the fiber module 60,160,260,360, or 460 (the first optical element) for the fiber laser device from being removed from inside the housing 16 when the laser beam is oscillated by the supercontinuum light source 10,110,210, or 310. By including the lock mechanism, it is possible to prevent damage (burning or the like) caused by removal of the fiber module 60,160,260,360, or 460 for the fiber laser device at the time of oscillation of the laser beam. The lock mechanism is a safety mechanism that prevents the fiber module 60,160,260,360, or 460 for the fiber laser device from being removed when the supercontinuum light source 10,110,210, or 310 is operated (for example, when power is on). For example, the lock mechanism may be a mechanism using a solenoid, and may be a detachment prevention pin that appears when the supercontinuum light source 10, 110, 210, or 310 is operated and engages with the module housing 61 or 361, and that is buried and releases the engagement when the supercontinuum light source 10, 110, 210, or 310 is not operated.

In the above embodiments, the second fiber connectors 32Aand 32B may be held by a normal holder that is not movable instead of the movable holder 76. In the above embodiments, the first optical element is housed in the module housing 61 or 361 to be modularized as the fiber module 60,160,260,360, or 460 for the fiber laser device, but such modularization may not be performed in some cases.

Various materials and shapes can be applied to each configuration in the above-described embodiments and modifications without being limited to the above-described materials and shapes. In addition, each configuration in the above-described embodiments and modifications can be arbitrarily applied to each configuration in other embodiments or modifications. One aspect of the present disclosure can also be regarded as the supercontinuum light source.

### Reference Signs List

10, 110, 210, 310 Supercontinuum light source (Fiber laser device)
11 Excitation light source (First optical element, Second optical element, Optical element)
12 Wavelength division multiplexing coupler (First optical element, Second optical element, Optical element)
13 Amplification fiber (Second optical element)
14 Output coupler (Second optical element)
15 Fiber structure (First optical element, Second optical element, Optical element)
16 Housing
16a Upper wall (Wall portion)
16b Rear wall (Wall portion)
18 Fiber tube
26, 29 Fiber (Second fiber)
27, 28 Fiber (First fiber)
31A First fiber connector (Fiber connector)
31B First fiber connector (Fiber connector, Second fiber connector)
32A, 32B Second fiber connector
33A Fiber connector (First fiber connector, Second fiber connector)
33B, 33C Fiber connector (First fiber connector)
34A Fiber connector (First fiber connector, Second fiber connector)
35C Fiber connector (Second fiber connector)
60, 160, 260, 360, 460 Fiber module for fiber laser device
61, 361 Module housing
62 Grip portion
66 Projecting portion
71, 371First opening
72 Second opening (Opening)
73 First partition plate (Partition plate)
74 Second partition plate (Support plate)
75 Fan
76 Movable holder
78 Holding portion
79 Adaptor
81, 181Fixing member
82, 185 Swing member
83x Swing shaft
92 Elastic member
140 Adapter detector
415 Isolator (First optical element, Second optical element, Optical element)
K Saturable absorber
R1 First space
R2 Second space.

## Claims

1. A fiber laser device comprising:
a housing;
a first optical element configured to be housed in the housing, include a first fiber and a first fiber connector provided at an end portion of the first fiber, and be for oscillating laser beam;
a second optical element configured to be housed in the housing, include a second fiber and a second fiber connector provided at an end portion of the second fiber, and be for oscillating the laser beam; and
a movable holder configured to hold the second fiber connector and be movable so that an orientation of the second fiber connector changes between a first orientation and a second orientation, wherein
the first optical element and the second optical element are optically connectable via the first fiber connector and the second fiber connector,
a first opening is formed in a wall portion of the housing,
the first orientation is an orientation of the second fiber connector when the first optical element and the second optical element are optically connected, and
the second orientation is an orientation of the second fiber connector in which an end surface of the second fiber is exposed through the first opening.

2. The fiber laser device according to claim 1, wherein the movable holder is provided on a support plate in the housing, and is movable so that the orientation of the second fiber connector changes between the first orientation along the support plate and the second orientation perpendicular to the support plate.

3. The fiber laser device according to claim 1 or 2, wherein the first opening is formed in a wall portion facing or adjacent to the movable holder in the housing.

4. The fiber laser device according to any one of claims 1 to 3, wherein the first optical element includes a saturable absorber, an excitation light source, or a wavelength division multiplexing coupler.

5. The fiber laser device according to any one of claims 1 to 4, wherein the first optical element is detachably attached inside the housing.

6. The fiber laser device according to claim 5, further comprising a lock mechanism configured to prevent the first optical element from being removed from inside the housing when the laser beam is oscillated by the fiber laser device.

7. The fiber laser device according to claim 5 or 6, wherein
at least a part of the first optical element is housed in a module housing,
a second opening is formed in a wall portion of the housing, and
the module housing is detachably attached inside the housing through the second opening.

8. The fiber laser device according to claim 7, wherein
the module housing is inserted through the second opening from one side in a predetermined direction of the module housing,
the module housing has a shape such that one side in a first direction perpendicular to the predetermined direction is different from the other side when viewed from the predetermined direction, and
the second opening corresponds to the shape of the module housing.

9. The fiber laser device according to claim 7 or 8, further comprising an elastic member configured to press the module housing toward a placement surface on which the module housing is placed.

10. The fiber laser device according to any one of claims 7 to 9, further comprising a grip portion provided on the module housing, wherein
the grip portion is provided to project from an outer surface of the housing in a state where the module housing is attached inside the housing, and
a projecting portion for covering at least a part of a periphery of the grip portion projecting is provided on the outer surface of the housing.

11. The fiber laser device according to any one of claims 1 to 10, wherein when the movable holder is moved so that the orientation of the second fiber connector is the second orientation, an end surface of the second fiber is located outside the housing through the first opening.

12. The fiber laser device according to any one of claims 1 to 11, wherein
the movable holder is at least partially formed of a magnetic material,
a holding portion provided in the housing and formed of a magnetic material is further provided, and
when the movable holder is moved so that the orientation of the second fiber connector is the second orientation, the movable holder is held to maintain the second orientation by magnetic force of the holding portion.

13. The fiber laser device according to any one of claims 1 to 12, further comprising a fiber tube fixed near the movable holder in the housing, wherein
the second fiber is inserted through the fiber tube.

14. The fiber laser device according to any one of claims 1 to 13, wherein the movable holder is movably fixed in the housing.

15. The fiber laser device according to any one of claims 1 to 14, comprising:
a partition plate configured to partition an inside of the housing into a first space and a second space; and
a fan configured to pump air in the first space, wherein
the first optical element, the second optical element, and the movable holder are arranged in the second space.

16. The fiber laser device according to any one of claims 1 to 15, further comprising:
an adapter configured to connect the first fiber connector and the second fiber connector; and
an adapter detector configured to detect presence or absence of the adapter.

17. The fiber laser device according to any one of claims 1 to 16, wherein
the movable holder includes a fixing member fixed in the housing, and a swing member swingable about a swing shaft with respect to the fixing member and provided with the second fiber connector, and
the swing member is movable by a predetermined length in a direction along the swing shaft with respect to the fixing member.
